# EUROPÄISCHE PATENTSCHRIFT

(11) **EP 3 121 795 B1**
(45) Veröffentlichungstag und Bekanntmachung des Hinweises auf die Patenterteilung: **11.05.2022**
(21) Anmeldenummer: 16179254.4
(22) Anmeldetag: 13.07.2016
(51) Int. Cl.: G07C 9/00

(54) **AUFBAU EINER KOMMUNIKATIONSVERBINDUNG MIT EINER BENUTZERVORRICHTUNG ÜBER EINE ZUGANGSKONTROLLVORRICHTUNG**
ESTABLISHMENT OF A COMMUNICATION CONNECTION WITH A USER DEVICE OVER AN ACCESS CONTROL DEVICE
ÉTABLISSEMENT D'UNE LIAISON DE COMMUNICATION AVEC UN DISPOSITIF UTILISATEUR AU MOYEN D'UN DISPOSITIF DE CONTROLE D'ACCES

(30) Priorität: 20.07.2015 DE 102015111711
(43) Veröffentlichungstag der Anmeldung: 25.01.2017
(73) Patentinhaber: Deutsche Post AG, 53113 Bonn (DE)
(72) Erfinder: Wiechers, Ralph, Dr., 53508 Mayschoß (DE)
(74) Vertreter: Cohausz & Florack

(56) Entgegenhaltungen:
- EP-A1- 2 891 433
- EP-A1- 2 892 031
- DE-C1- 4 127 316
- US-A1- 2004 049 406
- US-A1- 2011 053 557
- US-A1- 2013 212 248
- US-A1- 2014 035 721

## Beschreibung

### Gebiet

Die Erfindung betrifft den Aufbau einer Kommunikationsverbindung zwischen einer ersten Benutzervorrichtung und einer zweiten Benutzervorrichtung über eine Zugangskontrollvorrichtung.

### Hintergrund

Zugangskontrollvorrichtungen finden in vielerlei Hinsicht Anwendung, beispielsweise zur Kontrolle des Zugangs von Personen zu Räumen eines Gebäudes, wie es beispielsweise bei Hotels, Bürokomplexen oder Laboren der Fall ist, zu Veranstaltungen oder auch in abstrakter Form zu Funktionen, Ressourcen oder Diensten, beispielsweise von Computerfunktionen oder -ressourcen oder Serverdiensten.

Eine spezifische Anwendung von Zugangskontrollvorrichtungen bildet auch die Kontrolle des Zugangs von Personen zu einem Raum und/oder zu Öffnungen von Behältern, wie z.B. Schließfächern oder Warenzustellungsbehältern, insbesondere von Paketkästen. Paketkästen ermöglichen eine neuartige Form der Zustellung/Abholung von Paketen für Personen, die Pakete auch in Abwesenheit an oder in der Nähe ihres Wohnsitzes empfangen oder versenden wollen. Dazu werden Paketkästen üblicherweise vor dem Wohnsitz des Paketkastennutzers - ähnlich einem Briefkasten, aber mit größerem Fassungsvolumen - installiert und Pakete dann vom Zusteller durch Einlegen in den Paketkasten zugestellt oder durch Herausnehmen aus dem Paketkasten abgeholt. Um Missbrauch und Diebstahl zu verhindern, muss der Paketkasten über ein Schloss verfügen. Sowohl der Zusteller als auch der Paketkastennutzer müssen dann mit physikalischen oder elektronischen Schlüsseln ausgestattet werden, um den Paketkasten benutzen zu können. Hierzu können beispielsweise digitale Schlüssel als Datensätze auf sog. Token gespeichert sein, beispielsweise auf Mobiltelefonen oder RFID-Tags, die damit als elektronische Schlüssel fungieren können. In einigen Fällen kann eine Zustellung oder Abholung jedoch trotz eines zur Verfügung stehenden, gültigen Schlüssels für den Paketkasten nicht ohne weiteres möglich sein. Beispielsweise kann das Paket zu groß sein für den Paketkasten, oder der Paketkasten ist zwar im Freien, aber auf einem abgegrenzten Gelände hinter einem verschlossenen Tor angebracht. In einem solchen Fall bleibt dem Zusteller nichts anderes übrig als auf den Sendungsempfänger für eine persönliche Übergabe der Sendung zu warten oder die Zustellung abzubrechen und es zu einem späteren Zeitpunkt noch einmal zu versuchen. Die US 2004/049406 A1 betrifft eine Schlüsselbox mit Kommunikationsfunktionen für den Zugang zu einer Immobilie. Die EP 2 892 031 A1 und die EP 2891433 A1 sowie die US2014/035721 A1 betreffen Sendungsaufbewahrungsstationen mit Kommunikationsfunktion und die US 2011/053557 A1 betrifft ebenfalls eine Schlüsselbox.

### Zusammenfassung einiger beispielhafter Ausführungsformen der Erfindung

Die vorliegende Erfindung hat sich daher unter anderem die Aufgabe gestellt, diese Probleme zu überwinden. Die Erfindung wird durch die angehängten unabhängigen Ansprüche definiert. Vorteilhafte Ausgestaltungen sind Gegenstand der abhängigen Ansprüche. Aspekte, Beispiele und Ausgestaltungen der Beschreibung, welche nicht unter den Schutzbereich der angehängten Ansprüche fallen, gehören nicht zur Erfindung. Ihre Beschreibung dient vielmehr dem Verständnis des Lesers.

Gemäß der Erfindung wird ein Verfahren gemäß Anspruch 1 offenbart.

Gemäß der Erfindung wird ferner eine Zugangskontrollvorrichtung nach Anspruch 9 offenbart.

Verschiedene Schritte können optional von verschiedenen Mitteln ausgeführt werden. Die Zugangskontrollvorrichtung entspricht der Zugangskontrollvorrichtung in dem Verfahren. Die Mittel können Hardware- und/oder Software-Komponenten umfassen. Die Mittel können beispielsweise mindestens einen Speicher mit Programmanweisungen eines Computerprogramms (z.B. des Computerprogramms gemäß der Erfindung) und mindestens einen Prozessor ausgebildet zum Ausführen von Programmanweisungen aus dem mindestens einen Speicher umfassen.

Gemäß der Erfindung wird ferner ein Computerprogramm nach Anspruch 10 offenbart.

Gemäß einem Aspekt der Beschreibung wird ein Verfahren, ausgeführt durch einen Server, offenbart, das folgendes umfasst:
- Erhalten einer Anforderung zum Zusammenstellen und/oder Erzeugen von Berechtigungsinformationen, die zum Aufbau einer Kommunikationsverbindung über eine Zugangskontrollvorrichtung berechtigen;
- Zusammenstellen und/oder Erzeugen der Berechtigungsinformationen, wobei die Berechtigungsinformationen der Zugangskontrollvorrichtung ein Prüfen der Berechtigung zum Aufbau der Kommunikationsverbindung ermöglichen, und wobei die Berechtigungsinformationen zumindest teilweise auf der erhaltenen Anforderung basieren; und
- Bewirken des Kommunizierens und/oder Kommunizieren der Berechtigungsinformationen an die zweite Benutzervorrichtung zum Berechtigen der zweiten Benutzervorrichtung, einen Aufbau einer Kommunikationsverbindung über die Zugangskontrollvorrichtung anzufordern.

Gemäß dem Aspekt der Bescheibung wird ferner ein Server offenbart, der folgendes umfasst:
- Mittel eingerichtet zur Ausführung des Verfahrens gemäß dem zweiten Aspekt der Erfindung oder umfassend jeweilige Mittel zur Ausführung der Schritte des Verfahrens gemäß dem zweiten Aspekt der Erfindung.

Dabei können entweder alle Schritte des Verfahrens von den Mitteln gesteuert werden, oder alle Schritte des Verfahrens von den Mitteln ausgeführt werden, oder ein oder mehrere Schritte von den Mitteln gesteuert und ein oder mehrere Schritte von den Mitteln ausgeführt werden. Verschiedene Schritte können optional von verschiedenen Mitteln ausgeführt oder gesteuert werden. Der Server entspricht beispielsweise dem Server in dem Verfahren. Die Mittel können Hardware- und/oder Software-Komponenten umfassen. Die Mittel können beispielsweise mindestens einen Speicher mit Programmanweisungen eines Computerprogramms (z.B. des Computerprogramms gemäß dem zweiten Aspekt der Erfindung) und mindestens einen Prozessor ausgebildet zum Ausführen von Programmanweisungen aus dem mindestens einen Speicher umfassen.

Gemäß dem Aspekt der Beschreibung wird ferner ein Computerprogramm offenbart, das Programmanweisungen umfasst, die dazu ausgebildet sind, bei Ausführung durch mindestens einen Prozessor eine Vorrichtung zu veranlassen, das Verfahren gemäß dem Aspekt der Beschreibung auszuführen.

Ferner wird gemäß der Erfindung ein System nach Anspruch 11 offenbart.

Im Folgenden werden die Eigenschaften der Verfahren gemäß der Erfindung und dem Aspekt der Beschreibung,

der Zugangskontrollvorrichtung gemäß der Erfindung, des Servers gemäß dem Aspekt der Beschreibung, der Computerprogramme gemäß Erfindung und dem Aspekt der Beschreibung und des erfindungsgemäßen Systems - teilweise beispielhaft - beschrieben. Unter Prozessoren können jeweils unter anderem Kontrolleinheiten, Mikroprozessoren, Mikrokontrolleinheiten wie Mikrocontroller, digitale Signalprozessoren (DSP), Anwendungsspezifische Integrierte Schaltungen (ASICs) oder Field Programmable Gate Arrays (FPGAs) verstanden werden. Jedes der Computerprogramme kann beispielsweise über ein Netzwerk wie das Internet, ein Telefon- oder Mobilfunknetz und/oder ein lokales Netzwerk verteilbar sein. Jedes der Computerprogramme kann zumindest teilweise Software und/oder Firmware eines Prozessors sein. Jedes der Computerprogramme kann beispielsweise auf einem jeweiligen computerlesbaren Speichermedium gespeichert sein, z.B. einem magnetischen, elektrischen, elektro-magnetischen, optischen und/oder andersartigen Speichermedium. Das Speichermedium kann beispielsweise Teil eines Prozessors sein, beispielsweise ein (nicht-flüchtiger oder flüchtiger) Programmspeicher des Prozessors oder ein Teil davon; es kann aber auch eine von dem Prozessor separate Komponente sein.

Bestimmte beispielhafte Ausführungsformen gemäß der Erfindung sehen also vor, dass eine Zugangskontrollvorrichtung nicht nur zur Kontrolle des Zugangs zu einem Raum genutzt wird. Vielmehr dienen das Verfahren und die Zugangskontrollvorrichtung gemäß der Erfindung auch dazu, den Aufbau einer Kommunikationsverbindung mit der ersten Benutzervorrichtung über die Zugangskontrollvorrichtung zu ermöglichen. Ferner ermöglichen das Verfahren und die Zugangskontrollvorrichtung gemäß der Erfindung**,** die Berechtigung zum Aufbau der Kommunikationsverbindung anhand von Berechtigungsinformationen zu prüfen und somit die Nutzung der Kommunikationsverbindung zu kontrollieren.

Die Anforderung zum Aufbau einer Kommunikationsverbindung wird durch Empfangen der Anforderung durch Kommunikationsmittel der Zugangskontrollvorrichtung erhalten. Hierzu wurde die Anforderung von einer zweiten Benutzervorrichtung an die Zugangskontrollvorrichtung kommuniziert. Die Kommunikationsmittel der Zugangskontrollvorrichtung sind beispielsweise eingerichtet, mit einer oder mehreren Vorrichtungen (z.B. der ersten und/oder der zweiten Benutzervorrichtung und/oder dem Server gemäß dem Aspekt der Beschreibung) zu kommunizieren und Nachrichten zu senden und/oder zu empfangen. Die Anforderung ist beispielsweise Teil einer oder mehrerer durch die Kommunikationsmittel empfangenen Nachrichten.

Ein Beispiel für solche Kommunikationsmittel ist eine Kommunikationsschnittstelle. Zum Beispiel umfassen die Kommunikationsmittel der erfindungsgemäßen Steuervorrichtung eine Kommunikationsschnittstelle einer drahtlosen und/oder drahtgebundenen Kommunikationstechnik.

Ein Beispiel für eine drahtlose Kommunikationstechnik ist eine lokale Funknetztechnik wie Radio Frequency Identification (RFID) und/oder Near Field Communication (NFC) und/oder Bluetooth (z.B. Bluetooth Version 2.1 und/oder 4.0) und/oder Wireless Local Area Network (WLAN). RFID und NFC- sind beispielsweise gemäß den ISO-Standards 18000, 11784/11785 und dem ISO/IEC-Standard 14443-A und 15693 spezifiziert. Die Bluetooth-Spezifikationen sind derzeit im Internet unter www.bluetooth.org erhältlich. WLAN ist zum Beispiel in den Standards der IEEE-802.11-Familie spezifiziert. Ein weiteres Beispiel für eine drahtlose Kommunikationstechnik ist eine überregionale Funknetztechnik wie beispielsweise eine Mobilfunktechnik, zum Beispiel Global System for Mobile Communications (GSM) und/oder Universal Mobile Telecommunications System (UMTS) und/oder Long Term Evolution (LTE). Die GSM-, UMTS- und LTE-Spezifikationen werden von dem 3rd Generation Partnership Project (3GPP) gepflegt und entwickelt und sind derzeit im Internet unter anderem unter www.3gpp.com erhältlich.

Ein Beispiel für eine drahtgebundene Kommunikationstechnik ist beispielsweise Ethernet, USB (Universal Serial Bus), Firewire, UART (Universal Asynchronous Receiver Transmitter) wie RS-232, SPI (Serial Peripheral Interface), I2C (Inter-Integrated Circuit) und/oder Power over Ethernet (PoE). Die USB-Spezifikationen sind derzeit im Internet unter www.usb.org erhältlich. PoE ist beispielsweise im IEEE-Standard 802.3af-2003 spezifiziert. Es sollen jedoch auch spätere und zukünftige Versionen dieses und anderer Standards unter dem Begriff PoE verstanden werden. Zum Beispiel umfasst die Zugangskontrollvorrichtung entsprechende Kommunikationsmittel.

Eine Kommunikation zwischen der Zugangskontrollvorrichtung und der zweiten Benutzervorrichtung kann auf verschiedene Weisen initiiert werden. So kann beispielsweise vorgesehen sein, dass die zweite Benutzervorrichtung eine Kontaktanfrage an die Zugangskontrollvorrichtung aussendet, die diese dann annehmen kann. Das Aussenden einer solchen Kontaktanfrage kann beispielsweise auf eine Nutzeraktion oder einen anderen Trigger hin erfolgen. Alternativ könnte die Zugangskontrollvorrichtung beispielsweise ständig ein Signal aussenden. Bei Einsatz von Bluetooth könnte ein solches Signal beispielsweise ein immer gleiches Bluetooth oder Bluetooth Low Energy Signal sein. Die zweite Benutzervorrichtung empfängt das Signal, sobald es in Reichweite der Kommunikationsmittel der Zugangskontrollvorrichtung kommt, und kann dann auf den Empfang dieses Signal reagieren.

Die gemäß der Erfindung erhaltene Anforderung enthält Berechtigungsinformationen. Die Berechtigungsinformationen enthalten zum Beispiel ein oder mehrere Berechtigungsdaten und/oder -parameter. Dabei kann es sich beispielsweise um eine (insbesondere eindeutige) Kennung für die Zugangskontrollvorrichtung, eine (insbesondere eindeutige) Kennung für die Berechtigungsinformationen selbst, zeitliche Gültigkeitsinformationen (z.B. in Form eines "Nicht-Vor-Datums", eines "Nicht-Nach-Datums", einer "Startzeit des Tages" und einer "Endzeit des Tages", die angeben, innerhalb welcher Tage und innerhalb welcher Tageszeit eine Kommunikationsverbindung aufgebaut werden darf, beispielsweise vom 27.3.2014 00:00:00 Uhr bis zum 28.3.2014 23:59:59 Uhr) und/oder eine Obergrenze der erlaubten Nutzungen der Berechtigungsinformationen, um eine Kommunikationsverbindung aufzubauen, handeln.

Ferner kann die gemäß der Erfindung erhaltene Anforderung weitere Informationen wie beispielsweise Kommandoinformationen (z.B. Kommandodaten und/oder -parameter) zum Aufbau einer Kommunikationsverbindung umfassen. Dadurch kann die Zugangskontrollvorrichtung beispielsweise erkennen, dass die Anforderung den Aufbau einer Kommunikationsverbindung über die Zugangskontrollvorrichtung (und keine andere Aktion wie z.B. gewähren von Zugang) veranlassen soll. Dies ist beispielsweise vorteilhaft, um die gleichen Berechtigungsinformationen zum Prüfen der Berechtigung zum Zugang und zum Prüfen der Berechtigung zum Aufbauen einer Kommunikationsverbindung nutzen zu können.

Die Anforderung zum Aufbau einer Kommunikationsverbindung ist beispielsweise eine Anforderung, mit der die Zugangskontrollvorrichtung veranlasst werden soll, eine Kommunikationsverbindung mit der ersten Benutzervorrichtung aufzubauen, beispielsweise um eine Kommunikation eines Benutzers der sich in der Umgebung der Zugangskontrollvorrichtung und einem entfernten Benutzer zu ermöglichen. Es versteht sich, dass die erste Benutzervorrichtung in der Anforderung nicht spezifiziert sein muss. Vielmehr sollen als Anforderung zum Aufbau einer Kommunikationsverbindung mit einer ersten Benutzervorrichtung auch Anforderungen verstanden werden, die keine Angaben zu der ersten Benutzervorrichtung umfassen (z.B. lediglich die oben offenbarten Berechtigungsinformationen und ggfs. die ebenfalls oben offenbarten Kommandoinformationen zum Aufbau einer Kommunikationsverbindung umfassen). Alternativ ist es aber auch möglich, dass die erste Benutzervorrichtung in der Anforderung spezifiziert ist.

Gemäß der Erfindung prüft die Zugangskontrollvorrichtung die Berechtigung zum Aufbau einer Kommunikationsverbindung zumindest teilweise anhand der Berechtigungsinformationen. Wenn die Berechtigungsinformationen ein oder mehrere Berechtigungsdaten und/oder -parameter enthalten, wird beispielsweise geprüft, ob zumindest eine vordefinierte Menge (z.B. alle, oder nur einige) dieser Daten und/oder Parameter hinsichtlich jeweiliger Bezugsinformationen (z.B. jeweiliger in einem Speicher der Zugangskontrollvorrichtung gespeicherten Bezugsdaten und/oder Bezugsparameter) zum Aufbau einer Kommunikationsverbindung berechtigen.

Beispielsweise kann die Kennung für die Zugangskontrollvorrichtung als Berechtigungsparameter hinsichtlich einer in der Zugangskontrollvorrichtung gespeicherten Kennung der Zugangskontrollvorrichtung geprüft werden und bei Übereinstimmung festgestellt werden, dass dieser Berechtigungsparameter zum Aufbau einer Kommunikationsverbindung berechtigt. Dies ist beispielsweise vorteilhaft, wenn die Zugangskontrollvorrichtung eine Zugangskontrollvorrichtung einer Vielzahl von Zugangskontrollvorrichtungen ist, um sicherzustellen, dass die Berechtigungsinformation nur zum Aufbau einer Kommunikationsverbindung über eine Zugangskontrollvorrichtung mit der entsprechenden Kennung berechtigt.

Beispielsweise kann eine zeitliche Gültigkeitsinformation als Berechtigungsparameter mit der aktuelle Uhrzeit einer Uhr der Zugangskontrollvorrichtung verglichen und, falls die aktuelle Uhrzeit innerhalb der zeitlichen Gültigkeitsinformationen liegt, festgelegt werden, dass dieser Berechtigungsparameter zum Aufbau einer Kommunikationsverbindung berechtigt. Dies ist beispielsweise vorteilhaft, um die zeitliche Gültigkeit der Berechtigungsinformationen zu beschränken.

Gemäß der Erfindung ird beispielsweise nur dann das Aufbauen der Kommunikationsverbindung durch die Zugangskontrollvorrichtung bewirkt, wenn für zumindest eine bestimmte Menge der Berechtigungsparameter und/oder -daten festgestellt wurde, dass diese hinsichtlich ihrer jeweiligen Bezugsinformation in der Steuervorrichtung zum Aufbau einer Kommunikationsverbindung berechtigt.

Die Kommunikationsverbindung ist beispielsweise eine Sprachverbindung (z.B. eine Telefonverbindung und/oder eine Voice over Internet Protocol-Verbindung, VOIP-Verbindung), eine Videoverbindung (z.B. eine Videotelefonieverbindung) und/oder eine Textnachrichtenverbindung (z.B. eine Chat- und/oder Instantmessagingverbindung). Zum Beispiel umfasst die Kommunikationsverbindung eine Verbindung über ein überregionales Netzwerk wie ein Telefonnetzwerk, ein Mobilfunknetzwerk (z.B. ein GSM-, UMTS- und/oder LTE-Netzwerk) und/oder das Internet.

Unter dem Aufbauen einer Kommunikationsverbindung mit der ersten Benutzervorrichtung durch die Zugangskontrollvorrichtung soll beispielsweise verstanden werden, dass die Zugangskontrollvorrichtung den Aufbau einer Kommunikationsverbindung zwischen der Zugangskontrollvorrichtung und der ersten Benutzervorrichtung initiiert. Unter dem Bewirken des Aufbauens einer Kommunikationsverbindung mit der ersten Benutzervorrichtung durch die Zugangskontrollvorrichtung soll beispielsweise verstanden werden, dass die Zugangskontrollvorrichtung eine Kommandoinformation (z.B. Kommandodaten und/oder -parameter) an eine Kommunikationsvorrichtung (z.B. einen Server wie den Server gemäß dem zweiten Aspekt der Erfindung und/oder die erste Benutzervorrichtung) kommuniziert, die die Kommunikationsvorrichtung veranlasst, den Aufbau einer Kommunikationsverbindung mit der erste Benutzervorrichtung zu initiieren. Dabei soll unter Initiieren des Aufbaus einer Kommunikationsverbindung beispielsweise verstanden werden, dass der Aufbau der Kommunikationsverbindung gestartet wird. Um den Aufbau einer Telefon- und/oder Mobilfunkverbindung zu der ersten Benutzervorrichtung zu initiieren, wird beispielsweise die Telefonnummer der ersten Benutzervorrichtung an eine Vermittlungsstelle (z.B. eine Festnetzvermittlungsstelle und/oder ein Mobile Switching Centre) kommuniziert.

Wie oben offenbart, umfasst die Zugangskontrollvorrichtung entsprechend eingerichtete Kommunikationsmittel wie eine Kommunikationsschnittstelle.

Ausführungsbeispiele des Aspekts der Beschreibung betreffen beispielsweise das Zusammenstellen der Berechtigungsinformationen und das Kommunizieren der Berechtigungsinformationen an die zweite Benutzervorrichtung. Der Server gemäß dem Aspekt der Beschreibung ist beispielsweise ein Schlüsselserver und/oder ein Berechtigungsverwaltungsserver.

Die gemäß dem Aspekt der Beschreibung durch den Server erhaltene Anforderung zum Zusammenstellen und/oder Erzeugen von Berechtigungsinformationen wird beispielsweise durch Empfangen der Anforderung durch Kommunikationsmittel des Servers an dem Server erhalten. Die Kommunikationsmittel des Servers sind beispielsweise eingerichtet, mit einer oder mehreren Vorrichtungen (z.B. der ersten und/oder der zweiten Benutzervorrichtung) zu kommunizieren und Nachrichten zu senden und/oder zu empfangen. Die Anforderung ist beispielsweise Teil einer oder mehrerer durch die Kommunikationsmittel empfangenen Nachrichten.

Ein Beispiel für solche Kommunikationsmittel ist eine Kommunikationsschnittstelle.

Zum Beispiel umfassen die Kommunikationsmittel des Servers eine Kommunikationsschnittstelle einer drahtlosen und/oder drahtgebundenen Kommunikationstechnik.

Die Anforderung zum Zusammenstellen und/oder Erzeugen von Berechtigungsinformationen enthält beispielsweise Kommandoinformationen (z.B. Kommandodaten- und/oder -parameter), die den Server dazu veranlassen, Berechtigungsinformationen, die der Zugangskontrollvorrichtung ein Prüfen der Berechtigung zum Aufbau der Kommunikationsverbindung ermöglichen, zusammenzustellen und/oder zu erzeugen.

Die von dem Server erzeugten und/oder zusammengestellten Berechtigungsinformationen berechtigen beispielsweise lediglich zum Aufbau einer Kommunikationsverbindung (z.B. eine Kommunikationsverbindung mit einer bestimmten Benutzervorrichtung wie der ersten Benutzervorrichtung) über eine bestimmte Zugangskontrollvorrichtung.

Der Server stellt die Berechtigungsinformationen zumindest teilweise basierend auf der erhaltenen Anforderung zusammen und/oder erzeugt diese zumindest teilweise basierend darauf. Beispielsweise enthält die Anforderung Informationen zum Zusammenstellen und/oder Erzeugen der Berechtigungsinformationen wie eine (insbesondere eindeutige) Kennung der Zugangskontrollvorrichtung und/oder einen Zeitinformationen, die einen Zeitpunkt und/oder Zeitraum angeben, in dem der Aufbau der Kommunikationsverbindung voraussichtlich über die Zugangskontrollvorrichtung angefordert wird.

Unter dem Bewirken des Kommunizierens der zusammengestellten Berechtigungsinformationen an die zweite Benutzervorrichtung gemäß dem zweiten Aspekt der Erfindung soll vorliegend beispielsweise verstanden werden, dass der Server Zugangskontrollvorrichtung die zusammengestellten Berechtigungsinformationen und/oder eine Kommandoinformation (z.B. Kommandodaten und/oder -parameter) an eine weitere Vorrichtung kommuniziert, um die weitere Vorrichtung zu veranlassen, die zusammengestellten Berechtigungsinformationen an die zweite Vorrichtung zu kommunizieren. Alternativ oder zusätzlich kann der Server die zusammengestellten Berechtigungsinformationen an die zweite Benutzervorrichtung (insbesondere unmittelbar) kommunizieren.

Dementsprechend können die zusammengestellten Berechtigungsinformationen von dem Server an die zweite Benutzervorrichtung gemäß dem Aspekt der Beschreibung unmittelbar oder mittelbar, also beispielsweise über mindestens eine weitere Vorrichtung, kommuniziert werden. Die zusammengestellten Informationen können beispielsweise an die zweite Benutzervorrichtung kommuniziert werden, indem sie beispielsweise über ein Netzwerk an einen anderen Server (z.B. einen Bereitstellungsserver) und/oder Computer übertragen werden, der die Informationen dann drahtgebunden (z.B. über eine Docking-Station) oder drahtlos an die zweite Benutzervorrichtung überträgt, oder indem sie auf der zweiten Benutzervorrichtung gespeichert werden, oder indem sie über eine beispielsweise gesicherte Verbindung an eine Software ("App") auf der zweiten Benutzervorrichtung, insbesondere einem Mobiltelefon (z.B. einem Smartphone) kommuniziert und dort gespeichert werden.

Weitere Vorteile werden nachfolgend anhand beispielhafter Ausführungsformen der Verfahren gemäß der Erfindung und dem Aspekt der Beschreibung, der Zugangskontrollvorrichtung gemäß der Erfindung, des Servers gemäß dem Aspekt der Beschreibung, der Computerprogramme gemäß der Erfindung und dem Aspekt der Beschreibung und des erfindungsgemäßen Systems beschrieben, deren Offenbarung für die jeweiligen Kategorien (Verfahren, Vorrichtung, System, Computerprogramm) gleichermaßen gelten soll.

In einer beispielhaften Ausführungsform der Erfindung sind die Berechtigungsinformationen zumindest teilweise verschlüsselt, beispielsweise enthalten die Berechtigungsinformationen einen oder mehrere zumindest teilweise verschlüsselte Berechtigungsparameter.

Die Berechtigungsinformationen können beispielsweise zumindest teilweise mit einem symmetrischen Verschlüsselungsverfahren verschlüsselt sein. Alternativ oder zusätzlich können die Berechtigungsinformationen zumindest teilweise mit einem asymmetrischen Verschlüsselungsverfahren verschlüsselt sein.

Zum Beispiel werden die zumindest teilweise verschlüsselten Berechtigungsinformationen durch den Server gemäß dem zweiten Aspekt der Erfindung zusammengestellt. Beispielsweise verschlüsselt der Server die Berechtigungsinformationen zumindest teilweise beim Zusammenstellen und/oder Erzeugen der Berechtigungsinformationen. Dabei verwendet der Server beispielsweise einen ersten Schlüssel eines (z.B. asymmetrischen) Schlüsselpaares.

Das Prüfen der Berechtigung der Anforderung durch die Zugangskontrollvorrichtung gemäß der Erfindung umfasst dementsprechend beispielsweise folgendes:
- Entschlüsseln der verschlüsselten Berechtigungsinformationen; und
- Vergleichen der entschlüsselten Berechtigungsinformationen mit nicht verschlüsselten Informationen, wobei die nicht verschlüsselten Informationen ebenfalls in den Berechtigungsinformationen enthalten, aus enthaltenen Informationen hergeleitet und/oder in der Zugangskontrollvorrichtung gespeichert sind.

Wenn der Server gemäß dem Aspekt der Beschreibung einen ersten Schlüssel eines (z.B. asymmetrischen) Schlüsselpaares zum zumindest teilweise Verschlüsseln der Berechtigungsinformationen verwendet, verwendet die Zugangskontrollvorrichtung beispielsweise einen zweiten Schlüssel des Schlüsselpaares zum Entschlüsseln der verschlüsselten Berechtigungsinformationen. Ferner kann die Anforderung zum Aufbauen einer Kommunikationsverbindung gemäß der Erfindung eine Prüfinformation enthalten. Beispielsweise ist die Prüfinformation eine digitale Signatur. Zum Beispiel wird die digitale Signatur als Signatur der Berechtigungsinformationen oder darin enthaltener Informationen (z.B. ein oder mehrere Berechtigungsparameter und/oder -daten) erzeugt. Zum Beispiel wird die digitale Signatur durch den Server gemäß dem Aspekt der Beschreibung beim Zusammenstellen und/oder Erzeugen der Berechtigungsinformationen erzeugt und zusammen mit den Berechtigungsinformationen an die zweite Benutzervorrichtung kommuniziert. Dementsprechend kann das Prüfen der Berechtigung der Anforderung gemäß dem ersten Aspekt der Erfindung ein Prüfen der digitalen Signatur umfassen. Der Server kann für das Erzeugen der digitalen Signatur beispielsweise einen ersten Schlüssel und die Zugangskontrollvorrichtung für das Prüfen der digitalen Signatur einen zweiten Schlüssel eines Schlüsselpaars verwenden.

Sowohl beim Einsatz einer Verschlüsselung wie beim Einsatz einer digitalen Signatur kann das Schlüsselpaar ein asymmetrisches Schlüsselpaar sein. Für eine Verschlüsselung von Daten kann beispielsweise der erste Schlüssel ein öffentlicher Schlüssel und der zweite Schlüssel ein privater Schlüssel eines asymmetrisches Schlüsselpaars sein; für eine digitale Signatur kann die Zuordnung der Schlüssel umgekehrt sein. Der erste Schlüssel kann in beiden Fällen ausschließlich dem Server gemäß dem Aspekt der Beschreibung zur Verfügung stehen, und der zweite Schlüssel kann in beiden Fällen ausschließlich der Zugangskontrollvorrichtung gemäß zur Verfügung stehen. Ein asymmetrisches Schlüsselpaar kann beispielsweise nach dem RSA-Algorithmus erzeugt worden sein. Alternativ kann das Schlüsselpaar ein symmetrisches Schlüsselpaar sein. Das symmetrische Schlüsselpaar umfasst dann zweimal den gleichen Schlüssel, beispielsweise einen AES-Schlüssel. Der Schlüssel kann ausschließlich dem Server und der Zugangskontrollvorrichtung zur Verfügung stehen. Sowohl mit einem asymmetrischen Schlüsselpaar als auch mit einem symmetrischen Schlüsselpaar können die Informationen, die verschlüsselt oder signiert werden, direkt verschlüsselt oder signiert werden. Stattdessen könnte der Server beim Zusammenstellen und/oder Erzeugen der Berechtigungsinformationen gemäß dem Aspekt der Beschreibung auch zunächst einen Hashwert über die Informationen oder einen Teil der Informationen bilden, und den Hashwert dann mit dem ersten Schlüssel verschlüsseln oder signieren, um eine Prüfinformation zu erhalten. Bei dem Prüfen der Berechtigung der Anforderung gemäß der Erfindung kann die Zugangskontrollvorrichtung dann zunächst nach dem gleichen Algorithmus einen Hashwert über die entsprechenden Informationen bilden. Im Falle einer Verschlüsselung kann bei Übereinstimmung der Originalinformationen bzw. der Hashwerte von der Integrität (Unversehrtheit) der an der Zugangskontrollvorrichtung erhaltenen Informationen (z.B. der gesamten oder eines Teils der Berechtigungsinformationen) ausgegangen werden sowie davon, dass sie von einem berechtigten, vertrauenswürdigen Server zusammengestellt wurden. Im Falle einer Signatur kann bei Bestätigung der Validität der Signatur von der Integrität der an der Zugangskontrollvorrichtung erhaltenen Informationen (z.B. der gesamten oder eines Teils der Berechtigungsinformationen) ausgegangen werden sowie davon, dass sie von dem vertrauenswürdigen Server zusammengestellt wurden.

Gemäß der Erfindung umfasst das Verfahren ferner das Bereithalten einer oder mehrerer Kontaktinformationen, wobei die Kontaktinformationen Angaben zum Kontaktieren der ersten Benutzervorrichtung umfassen. Zum Beispiel sind die Kontaktinformationen in einem Speicher der Zugangskontrollvorrichtung gespeichert.

Unter Kontaktinformationen sollen vorliegende beispielsweise eine eindeutige Kennung der ersten Benutzervorrichtung und/oder eines Benutzers der ersten Benutzervorrichtung (z.B. in einem Kommunikationsnetzwerk und/oder einem Kommunikationsdienst) verstanden werden. Ein Beispiel für solche Kontaktinformationen ist eine Teilnehmeradresse, eine Telefonnummer, eine Emailadresse, eine SIP-Adresse (Session Initiation Protocol-Adresse, beispielsweise sip:userid@domain), ein Benutzername und/oder eine Benutzernummer.

Zum Beispiel wird die Kontaktinformation beim Aufbau der

Kommunikationsverbindung mit der ersten Benutzervorrichtung verwendet, beispielsweise um die erste Benutzervorrichtung zu kontaktieren und/oder zu identifizieren.

Zum Beispiel hält die Zugangskontrollvorrichtung lediglich Kontaktinformationen zum Kontaktieren der ersten Benutzervorrichtung bereit, so dass eine Spezifizierung der ersten Benutzervorrichtung in der Anforderung zum Aufbau der Kommunikationsverbindung nicht notwendig ist. Es versteht sich, dass die Zugangskontrollvorrichtung auch Kontaktinformationen zum Kontaktieren verschiedener Benutzervorrichtung bereithalten kann, so dass ggfs. eine Spezifizierung der ersten Benutzervorrichtung in der Anforderung zum Aufbau der Kommunikationsverbindung notwendig ist. Alternativ oder zusätzlich könnte in diesem Fall auch eine Reihenfolge in der versucht werden soll, eine Kommunikationsverbindung mit den Benutzervorrichtungen aufzubauen, vorgegeben sein.

Gemäß der Erfindung wird die Anforderung an der Zugangskontrollvorrichtung von einer zweiten Benutzervorrichtung erhalten. Ferner wird die Kommunikationsverbindung zwischen der ersten Benutzervorrichtung und der zweiten Benutzervorrichtung aufgebaut wird.

Die zweite Benutzervorrichtung ist beispielsweise:
- ein tragbares elektronisches Gerät (z.B. ein "Tag" wie ein RFID- oder NFC-Tag, beispielsweise ein MiFARE DESFire von NXP) und/oder
- ein tragbares elektronisches Gerät eines Zustellers und/oder
- ein Handscanner (beispielsweise der Dolphin 99EX Mobile Computer der Firma Honeywell und/oder
- ein mobiles Kommunikationsgerät (z.B. ein Mobiltelefon wie ein Smartphone).

Dies hat den Effekt, dass ein Benutzer der zweiten Benutzervorrichtung über die Zugangskontrollvorrichtung eine Kommunikationsverbindung zwischen der ersten und der zweiten Benutzervorrichtung aufbauen kann. Dementsprechend kann der Benutzer der zweiten Benutzervorrichtung die zweite Benutzervorrichtung zur Kommunikation mit einem Benutzer der ersten Benutzervorrichtung nutzen, beispielsweise ohne dass der Benutzer der zweiten Benutzervorrichtung und/oder die zweite Benutzervorrichtung Zugriff auf Kontaktinformationen zum Kontaktieren der ersten Benutzervorrichtung hat und/oder erhält.

Dies ist beispielsweise vorteilhaft, um eine Kommunikation zwischen einem Zusteller und einem Sendungsempfänger zu ermöglichen, wenn die Sendung zu groß für ein von der Zugangskontrollvorrichtung kontrollierte Aufnahmeeinheit (z.B. einen Paketkasten) ist und der Sendungsempfänger sich nicht am Auslieferungsort befindet. In diesem Fall können der Sendungsempfänger und der Zusteller beispielsweise über die Kommunikationsverbindung kommunizieren, um einen alternativen Auslieferungsort und/oder -zeitpunkt zu vereinbaren. Eine Sendung ist beispielsweise ein Packstück, ein Stückgut, eine Paketsendung (z.B. ein Paket) und/oder eine Briefsendung (z.B. ein Brief).

Zum Beispiel kommunizieren die Zugangskontrollvorrichtung und die zweite Benutzervorrichtung ausschließlich über eine (oder mehrere) lokale Verbindung(en). Erfindungsgemäß ist eine esolche lokale Verbindung eine drahtlose Verbindung gemäß einer lokalen Funknetztechnik und/oder eine Verbindung über ein drahtloses lokales Netzwerk, beispielsweise ist eine solche lokale Verbindung eine Bluetooth-und/oder WLAN-Verbindung. Dies hat beispielsweise den Effekt, dass die zweite Benutzervorrichtung die Kommunikationsverbindung nur dann Anfordern und nutzen kann, wenn sie sich innerhalb der Reichweite der lokalen Funknetztechnik und/oder des drahtlosen lokalen Netzwerks um die Zugangskontrollvorrichtung herum befindet. Dadurch kann die Nutzung der Kommunikationsverbindung auf zweite Benutzervorrichtungen beschränkt werden, die sich in der Umgebung der Zugangskontrollvorrichtung befinden.

Beispielsweise umfasst die Kommunikationsverbindung gemäß dem ersten Aspekt der Erfindung eine (z.B. drahtlose) Verbindung über ein überregionales Kommunikationsnetzwerk zwischen der ersten Benutzervorrichtung und der zweiten Benutzervorrichtung. Wie oben offenbart, ist eine Verbindung über ein überregionales Kommunikationsnetzwerk beispielsweise ein Telefonnetzwerk, ein Mobilfunknetzwerk (z.B. ein GSM-, UMTS- und/oder LTE-Netzwerk) und/oder das Internet. Dies hat beispielsweise den Effekt, dass die erste Benutzervorrichtung und die zweite Benutzervorrichtung unmittelbar und über eine große Entfernung miteinander kommunizieren können.

Erfindungsgemäß umfasst das Bewirken des Aufbauens der Kommunikationsverbindung mit der ersten Benutzervorrichtung das Kommunizieren einer Anforderung, eine Kommunikationsverbindung mit der zweiten Benutzervorrichtung aufzubauen, an die erste Benutzervorrichtung. Erfindungsgemäß umfasst die gemäß dem ersten Aspekt der Erfindung an der Zugangskontrollvorrichtung erhaltene Anforderung neben den Berechtigungsinformationen Kontaktinformationen zum Kontaktieren der zweiten Benutzervorrichtung. Die an die erste Benutzervorrichtung kommunizierte Anforderung, eine Kommunikationsverbindung mit der zweiten Benutzervorrichtung aufzubauen, könnte diese Kontaktinformationen enthalten, um die erste Benutzervorrichtung in die Lage zu versetzen, die Kommunikationsverbindung zwischen der ersten Benutzervorrichtung und der zweiten Benutzervorrichtung aufzubauen. Beim Aufbau der Kommunikationsverbindung mit der zweiten Benutzervorrichtung könnte die erste Benutzervorrichtung beispielsweise das Kommunizieren von Kontaktinformationen an die zweite Benutzervorrichtung unterdrücken.

In einer beispielhaften Ausführungsform der Erfindung umfasst die Kommunikationsverbindung eine Verbindung über ein überregionales Kommunikationsnetzwerk zwischen der Zugangskontrollvorrichtung und der ersten Benutzervorrichtung. Wie oben offenbart, ist eine Verbindung über ein überregionales Kommunikationsnetzwerk beispielsweise ein Telefonnetzwerk, ein Mobilfunknetzwerk (z.B. ein GSM-, UMTS- und/oder LTE-Netzwerk) und/oder das Internet. Dies hat beispielsweise den Effekt, dass die erste Benutzervorrichtung und die Zugangskontrollvorrichtung unmittelbar und über eine große Entfernung miteinander kommunizieren können.

Zum Beispiel umfasst die Zugangskontrollvorrichtung Benutzerein- und Benutzerausgabemittel, um eine Kommunikation eines Benutzers der Zugangskontrollvorrichtung über die Verbindung über das überregionale Kommunikationsnetzwerk zwischen der Zugangskontrollvorrichtung und der ersten Benutzervorrichtung mit einem Benutzer der ersten Benutzervorrichtung zu ermöglichen. In diesem Beispiel umfasst die Kommunikationsverbindung beispielsweise ausschließlich eine Verbindung über das überregionale Kommunikationsnetzwerk zwischen der Zugangskontrollvorrichtung und der ersten Benutzervorrichtung.

Alternativ oder zusätzlich kann die Kommunikationsverbindung eine lokale Verbindung zwischen der Zugangskontrollvorrichtung und der zweiten Benutzervorrichtung umfassen. Wie oben offenbart, ist eine solche lokale Verbindung eine drahtlose Verbindung gemäß einer lokalen Funknetztechnik und/oder eine Verbindung über ein drahtloses lokales Netzwerk, beispielsweise ist eine solche lokale Verbindung eine Bluetooth- und/oder WLAN-Verbindung. Dies hat beispielsweise den Vorteil, dass die Zugangskontrollvorrichtung keine eigenen Benutzerein- und Benutzerausgabemittel umfassen muss, um eine Kommunikation eines Benutzers der zweiten Benutzervorrichtung mit einem Benutzer der ersten Benutzervorrichtung zu ermöglichen. In diesem Beispiel dient die Zugangskontrollvorrichtung zum Beispiel als Vermittlungsstelle (z.B. als Gateway) zwischen Verbindung über das überregionale Netzwerk zu der ersten Benutzervorrichtung und der lokalen Verbindung zu der zweiten Benutzervorrichtung.

In einer beispielhaften Ausführungsform der Erfindung ist die Zugangskontrollvorrichtung ortsfest angebracht, in oder an einem Paketkasten angebracht, Teil eines Schließsystems eines Paketkastens, in oder an einem Paketbutler angebracht, Teil eines Schließsystems eines Paketbutlers, Teil einer Aufnahmeeinheit zur Aufnahme einer Sendung. Erfindungsgemäß kontrolliert die Zugangskontrollvorrichtung den Zugang zu einer Aufnahmeeinheit zur Aufnahme einer Sendung. Neben einem Paketkasten und/oder einem Paketkasten kann eine solche Aufnahmeeinheit auch jede andere zur Aufnahme einer Sendung geeignete Einheit sein. Zum Beispiel ist auch ein Fahrzeug eine zur Aufnahme einer Sendung geeignete Einheit. Beispielsweise kontrolliert die Zugangskontrollvorrichtung in diesem Beispiel den Zugang zu einem Innenraum des Fahrzeugs.

Dementsprechend umfasst das Verfahren gemäß der Erfindung ferner:
- Erhalten einer Anforderung zum Gewähren des Zugangs zu einem Raum, wobei die Anforderung ebenfalls die Berechtigungsinformationen (oder andere Berechtigungsinformationen) enthält;
- Prüfen der Berechtigung der Anforderung zum Gewähren des Zugangs zu einem Raum zumindest teilweise anhand der Berechtigungsinformationen (oder der anderen Berechtigungsinformationen); und
- Bewirken des Gewährens des Zugangs und/oder Gewährens des Zugangs zu dem Raum nur dann, wenn das Prüfen ergibt, dass die Anforderung zum Gewähren des Zugangs zu dem Raum berechtigt ist.

Der Raum ist beispielsweise ein Aufnahmefach zur Aufnahme einer Sendung, beispielsweise ein Aufnahmefach einer Aufnahmeeinheit wie eines Paketkastens oder eines Paketbutlers.

Das Erhalten der Anforderung zum Gewähren des Zugangs zu einem Raum und das Prüfen der Berechtigung der Anforderung zum Gewähren des Zugangs zu einem Raum entsprechen beispielsweise dem Erhalten einer Anforderung zum Aufbau einer Kommunikationsverbindung und dem Prüfen der Berechtigung der Anforderung zum Aufbau einer Kommunikationsverbindung. Zum Beispiel unterscheiden sich die Anforderung zum Gewähren des Zugangs zu einem Raum und die Anforderung zum Aufbau einer Kommunikationsverbindung nur durch darin enthaltene Kommandoinformationen, die beispielsweise angeben, ob Zugang zu einem Raum gewährt werden soll oder ob eine Kommunikationsverbindung aufgebaut werden soll. Dementsprechend sollen die Offenbarungen zum Erhalten einer Anforderung zum Aufbau einer Kommunikationsverbindung und zum Prüfen der Berechtigung der Anforderung zum Aufbau einer Kommunikationsverbindung entsprechend auch für das Erhalten der Anforderung zum Gewähren des Zugangs zu einem Raum und das Prüfen der Berechtigung der Anforderung zum Gewähren des Zugangs zu einem Raum gelten.

Unter dem Bewirken des Gewährens des Zugangs und/oder dem Gewährens des Zugangs zu dem Raum soll beispielsweise verstanden werden, dass die Zugangskontrollvorrichtung einen Schließmechanismus einer Tür, die den Raum verschließt, ansteuert, um den Schließmechanismus zu veranlassen, die Tür zu entriegeln und/oder zu öffnen. Beispielsweise umfasst die Zugangskontrollvorrichtung Ansteuerungsmittel, die eingerichtet sind, einen Schließmechanismus einer Tür entsprechend anzusteuern. Ein Beispiel für einen solchen Schließmechanismus ist ein elektronisch ansteuerbares Türschloss.

In einer beispielhaften Ausführungsform der Erfindung ist die erste Benutzervorrichtung ein tragbares elektronisches Gerät (z.B. ein Medienabspielgerät wie ein iPod, ein Computer wie ein Desktop-Computer, ein Laptop-Computer und/oder ein Tablet-Computer), ein tragbares elektronisches Gerät eines Sendungsempfängers, ein Handscanner und/oder ein mobiles Kommunikationsgerät (z.B. ein Mobiltelefon wie ein Smartphone) ist.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

Es zeigen:
- Fig. 1: eine schematische Darstellung einer Ausführungsform einer Zugangskontrollvorrichtung gemäß der Erfindung;
- Fig. 2: eine schematische Darstellung einer Ausführungsform eines Servers;
- Fig. 3: eine schematische Darstellung einer beispielhaften Ausführungsform eines Systems gemäß der Erfindung;
- Fig. 4: ein Flussdiagramm, das Aktionen für eine Bereitstellung eines digitalen Schlüssels für einen Handscanner eines Zustellers darstellt; und
- Fig. 5: ein Flussdiagramm, das die Anforderung des Aufbaus einer Kommunikationsverbindung mit einer ersten Benutzervorrichtung über eine Zugangskontrollvorrichtung des Paketkastens mittels eines Handscanners mit geeignetem digitalem Schlüssel darstellt.

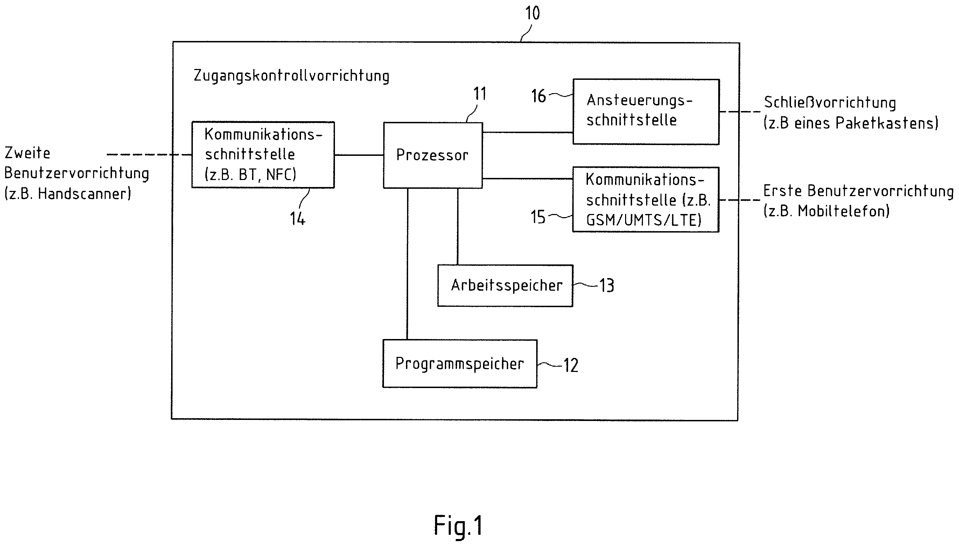

Fig. 1 ist eine schematische Darstellung einer beispielhaften Ausführungsform einer Zugangskontrollvorrichtung 10 gemäß der Erfindung.

Die Zugangskontrollvorrichtung 10 umfasst beispielhaft einen Prozessor 11 und verbunden mit dem Prozessor 11 einen ersten Speicher als Programm- und Datenspeicher 12, einen zweiten Speicher als Arbeitsspeicher 13, eine erste Kommunikationsschnittstelle 14, eine zweite Kommunikationsschnittstelle 15 und eine Ansteuerungsschnittstelle 16. Es versteht sich, dass für die gleichen und/oder zusätzliche Aufgaben statt eines Prozessors 11 auch mehrere Prozessoren, statt jeweils eines Speichers 12,13 auch mehrere Speicher und statt einer Ansteuerungsschnittstelle 16 auch mehrere Ansteuerungsschnittstellen vorgesehen sein können. Der Prozessor 11 kann beispielsweise ein Mikroprozessor sein, der auch eine Uhr umfasst.

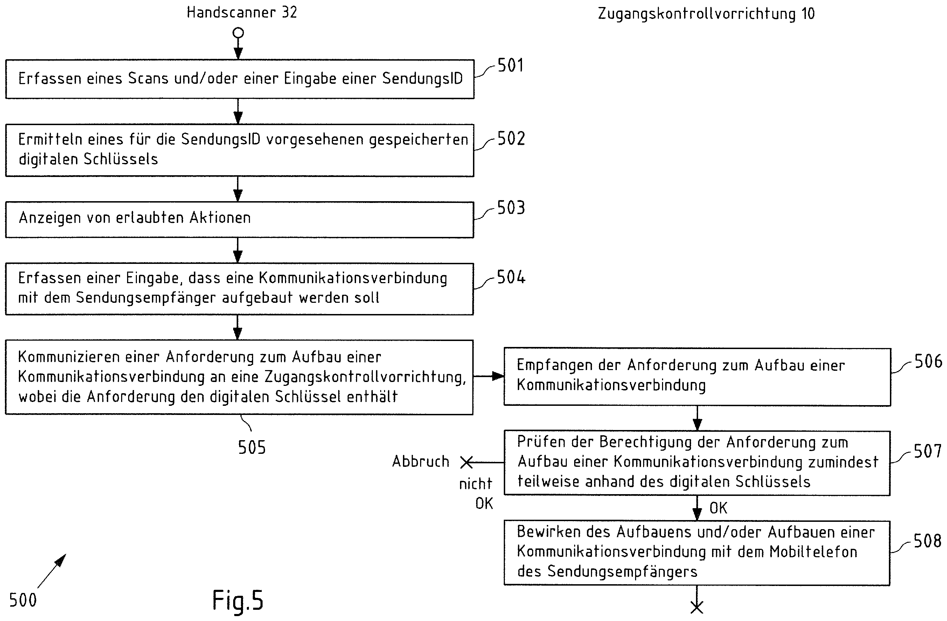

Der Speicher 12 kann beispielsweise ein Festwertspeicher (Read Only Memory ROM) sein, der nur einen Lesezugriff gestattet. Hierdurch kann die Vorrichtung 10 vor Manipulationen geschützt werden. Der Speicher 12 speichert Programmanweisungen von mindestens einem Computerprogramm. Das Computerprogramm kann ein beispielhaftes Computerprogramm gemäß der Erfindung sein, und Speicher 12 kann ein beispielhaftes Speichermedium sein. Eine Vorrichtung - z. B. die Zugangskontrollvorrichtung 10 oder eine die Zugangskontrollvorrichtung 10 enthaltende Vorrichtung (z.B. ein Paketkasten) - wird beispielsweise veranlasst, das Verfahren gemäß dem ersten Aspekt der Erfindung und/oder die Schritte des Verfahrens gemäß dem ersten Aspekt der Erfindung (z.B. die Schritte 506 bis 508 des in Fig. 5 dargestellten Flussdiagrams 500) auszuführen, wenn der Prozessor 11 die in Speicher 12 gespeicherten Programmanweisungen ausführt. Neben Programmanweisungen können in dem Programmspeicher auch Werte verschiedener Parameter gespeichert sein, wie eine der Zugangskontrollvorrichtung 10 zugeordnete MAC-Adresse und/oder eine andere Kennung (z.B. Identifizierungsnummer des Schließsystems LockID) der Zugangskontrollvorrichtung 10 oder ein Schlüssel S2 zum Entschlüsseln von erhaltenen Nachrichten bzw. zum Verifizieren von digitalen Signaturen. Solche Parameterwerte können aber alternativ auch in einem zusätzlichen, nicht dargestellten nicht-flüchtigen Schreib-Lese-Speicher (Random Access Memory RAM) gespeichert sein. Hier könnten dann zusätzlich veränderliche und bei Fabrikation der Vorrichtung 10 noch nicht bekannte Parameter, wie beispielsweise ein Passwort für ein WLAN, gespeichert werden. Weiter alternativ kann aber auch Speicher 12 selber als nicht-flüchtiger Schreib-Lese-Speicher ausgebildet sein. Hierdurch werden zum Beispiel Aktualisierungen der Programmanweisungen ermöglicht bzw. erleichtert.

Der Arbeitsspeicher 13 kann beispielsweise ein flüchtiger Schreib-Lese-Speicher (RAM) sein. Hier können zum Beispiel erhaltene Daten, aktuell genutzte Programmanweisungen und Zwischenergebnisse gespeichert werden, solange sie benötigt werden.

Die erste Kommunikationsschnittstelle 14 kann beispielsweise eine Schnittstelle für eine Bluetooth (BT) oder NFC basierte Kommunikation sein. Sie ist für eine Kommunikation mit einer zweiten Benutzervorrichtung vorgesehen. Die zweite Benutzervorrichtung kann eine beliebige tragbare elektronische Vorrichtung sein, beispielsweise ein Handscanner eines Zustellers oder ein Mobiltelefon eines Benutzers. Es versteht sich, dass die Zugangskontrollvorrichtung 10 über diese Schnittstelle 14 mit diversen zweiten Benutzervorrichtungen (z.B. Handscannern von Zustellern) kommunizieren kann.

Die zweite Kommunikationsschnittstelle 15 kann beispielsweise eine Schnittstelle für eine Kommunikation über ein GSM-, UMTS- und/oder LTE-Mobilfunknetzwerk sein. Sie ist für eine Kommunikation mit einer ersten Benutzervorrichtung (z.B. einem Mobiltelefon des Besitzers und/oder Eigentümers der Zugangskontrollvorrichtung 10 vorgesehen).

Die Ansteuerungsschnittstelle 16 kann beispielsweise eine Schnittstelle zu mindestens einem Aktor sein, der von der Zugangskontrollvorrichtung 10 gesteuert wird. Ein solcher Aktor kann beispielsweise eine elektronisch steuerbare Schließeinrichtung, etwa für eine Tür eines Paketkastens, sein. Umfasst der Paketkasten mehrere Fächer, so kann über die gleiche Ansteuerungsschnittstelle 16 oder über mehrere Ansteuerungsschnittstellen eine jeweilige elektronisch steuerbare Schließeinrichtung für jede Tür jedes der Fächer angesteuert werden.

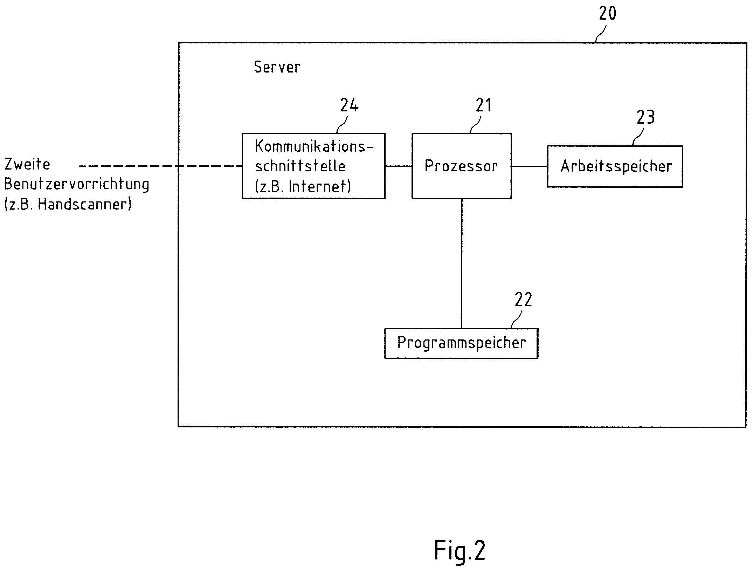

Die Zugangskontrollvorrichtung 10 kann auch weitere Komponenten enthalten. Beispielsweise könnte die Zugangskontrollvorrichtung 10 ein Schließsystem sein, das unter anderem auch eine elektronisch steuerbare Schließeinrichtung enthält, oder eine Aufbewahrungsvorrichtung, wie ein Paketkasten, die ein solches Schließsystem und einen dadurch gesicherten Raum umfasst. Alternativ könnte die Zugangskontrollvorrichtung 10 auch weniger Komponenten enthalten, etwa nur den Prozessor 11 und die Speicher 12 und 13. Sie könnte beispielsweise ein Modul für ein Zugangskontrollsystem sein, das zusätzlich die Schnittstellen 14,15 und 16 enthält. Fig. 2 ist eine schematische Darstellung einer beispielhaften Ausführungsform eines Servers 20 gemäß dem Aspekt der Beschreibung.

Der Server 20 kann beispielsweise ein Schlüsselserver und/oder ein Berechtigungsverwaltungsserver sein, der eine zweite Benutzervorrichtung mit einer Berechtigung versieht, über eine Zugangskontrollvorrichtung den Aufbau einer Kommunikationsverbindung anzufordern.

Der Server 20 umfasst beispielhaft einen Prozessor 21 und verbunden mit dem Prozessor 21 einen ersten Speicher 22 als Daten- und Programmspeicher, einen zweiten Speicher 23 als Arbeitsspeicher und eine Kommunikationsschnittstelle 24. Es versteht sich, dass für die gleichen und/oder zusätzliche Aufgaben statt eines Prozessors 21 auch mehrere Prozessoren und statt jeweils eines Speichers 22, 23 auch mehrere Speicher vorgesehen sein können.

Der Prozessor 21 kann beispielsweise ein Mikroprozessor und/oder ein digitaler Signalprozessor sein.

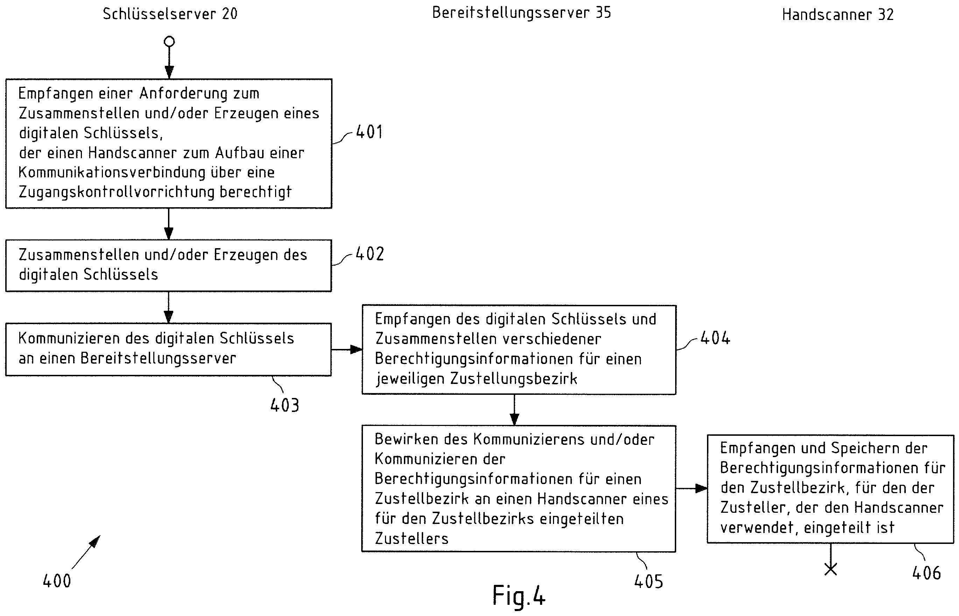

Der Speicher 22 kann beispielsweise ein nicht-flüchtigen Schreib-Lese-Speicher sein. Der Programmspeicher speichert Programmanweisungen von mindestens einem Computerprogramm. Das Computerprogramm kann ein beispielhaftes Computerprogramm gemäß dem Aspekt der Beschreibung sein, und Speicher 22 kann ein beispielhaftes Speichermedium gemäß dem Aspekt der Beschreibung sein. Eine Vorrichtung - z. B. der Server 20 - wird beispielsweise veranlasst, das Verfahren gemäß dem Aspekt der Beschreibung und/oder die Schritte des Verfahrens gemäß dem Aspekt der Beschreibung (z.B. die Schritte 401 bis 403 des in Fig. 4 dargestellten Flussdiagrams 400) auszuführen, wenn der Prozessor 21 die in Speicher 22 gespeicherten Programmanweisungen ausführt. Neben Programmanweisungen können in dem Speicher 22 auch verschiedene Daten gespeichert sein. Solche Daten können beispielsweise eine Zuordnung verschiedener Parameterwerte zu verschiedenen Zugangskontrollvorrichtungen 10 umfassen. So könnte etwa einer jeweiligen Kennung (z.B. Identifizierungsnummer des Schließsystems LockID) einer Zugangskontrollvorrichtung 10 ein Schlüssel S1 zum Verschlüsseln und/oder Signieren von Nachrichten für die

Zugangskontrollvorrichtung 10, eine MAC-Adresse der Zugangskontrollvorrichtung 10 und/oder eine Straßenadresse der Zugangskontrollvorrichtung 10 zugeordnet sein. Solche Daten können aber alternativ auch in einem zusätzlichen, nicht dargestellten nicht-flüchtigen Schreib-Lese-Speicher gespeichert sein.

Der Arbeitsspeicher 23 kann beispielsweise wiederum ein flüchtiger Schreib-Lese-Speicher sein, in dem erhaltene Daten, aktuell genutzte Programmanweisungen und Zwischenergebnisse gespeichert werden können, solange sie benötigt werden.

Die Kommunikationsschnittstelle 24 kann beispielsweise eine TCP/IP Schnittstelle sein, die eine direkte oder indirekte Kommunikation mit diversen anderen Einrichtungen über das Internet ermöglicht, zum Beispiel mit tragbaren elektronischen Geräten (z.B. der zweiten Benutzervorrichtung) und anderen Servern. Der Server 20 kann beliebige weitere Komponenten enthalten, wie etwa eine Nutzerschnittstelle für Wartungsaufgaben. Alternativ könnte der Server 20 auch weniger Komponenten enthalten, etwa nur den Prozessor 21 und die Speicher 22 und 23.

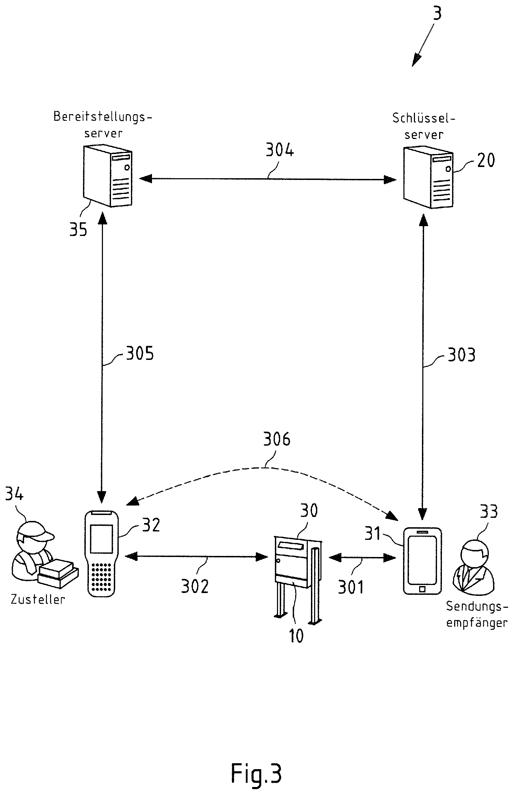

Fig. 3 ist eine schematische Darstellung einer beispielhaften Ausführungsform eines Systems 3 gemäß der Erfindung.

Das System 3 umfasst unter anderem die Zugangskontrollvorrichtung 10 und den Server 20. In System 3 ist die Zugangskontrollvorrichtung 10 beispielhaft als Teil eines ortsfesten Paketkastens 30 dargestellt. Ferner ist der Server 20 in System 30 beispielhaft ein Schlüsselserver eines Logistik- und/oder Zustellungsdienstes.

Der Paketkasten 30 umfasst neben der Zugangskontrollvorrichtung 10 beispielsweise mindestens ein Schließsystem mit einer digitalen Schließeinrichtung. Die digitale Schließeinrichtung kann eine Tür des Paketkastens 30 sichern. Der Paketkasten 30 ist beispielhaft ein Paketkasten für ein Einfamilienhaus, der ein einzelnes Fach mit zugeordnetem Schließsystem umfasst. Alternativ könnte er aber auch ein Paketkasten für ein Mehrfamilienhaus sein und eine Mehrzahl von durch eine jeweilige Schließeinrichtung gesicherten Fächern umfassen. In letzterem Fall können alle Schließeinrichtungen zu dem gleichen Schließsystem gehören und von der gleichen Zugangskontrollvorrichtung (z.B. der Zugangskontrollvorrichtung 10) gesteuert werden; oder es kann eine separate Zugangskontrollvorrichtung für jede Schließeinrichtung eingesetzt werden, so dass für jedes Fach ein eigenes Schließsystem vorhanden ist. Jede Schließeinrichtung und/oder das gesamte Schließsystem ist durch eine eindeutige Kennung (LockID) identifiziert. Der Paketkasten 30 kann zusätzlich mindestens einen Briefkasten umfassen.

Optional umfasst das System 3 außerdem eine beispielhafte als Mobiltelefon dargestellte erste Benutzervorrichtung 31 und eine beispielshaft als Handscanner dargestellte zweite Benutzervorrichtung 32.

Das Mobiltelefon 31 ist beispielsweise das Mobiltelefon eines Sendungsempfängers 33, dem der Paketkasten 30 gehört. Auf dem Mobiltelefon 31 kann eine Anwendung gespeichert sein, die die Nutzung und ggf. Konfigurierung der Zugangskontrollvorrichtung 10 sowie ggfs. die Registrierung des Paketkastens 30 beim Logistik- und/oder Zustellungsdienst ermöglicht. Das Mobiltelefon 31 kann beispielsweise dazu eingerichtet sein, über eine Verbindung 301 über ein Mobilfunknetzwerk (z.B. ein GSM-, UMTS- und/oder LTE-Mobilfunknetzwerk) mit der Zugangskontrollvorrichtung 10 des Paketkastens 30 zu kommunizieren. Es versteht sich, dass alternativ oder zusätzlich zu der Verbindung 301 weitere Verbindungen (z.B. eine WLAN-Verbindung) zwischen dem Mobiltelefon 31 und der Zugangskontrollvorrichtung 10 des Paketkastens 30 möglich sind.

Der Handscanner 32 ist zum Beispiel ein Handscanner eines Zustellers 34 eines Logistik- und/oder Zustellungsdienstes, der mit der Zustellung der Sendung beauftragt wurde. Der Handscanner 32 umfasst zum Beispiel einen Scanner zum Scannen von SendungsIDs oder anderen Codes auf Paketen oder anderen Postsendungen, mindestens einen Speicher zum Speichern von aktuellen digitalen Schlüsseln für diverse Paketkästen und zum Speichern von Programmanweisungen zum Veranlassen des Handscanners 32, verschiedene Aktionen auszuführen. Der Handscanner 32 kann beispielsweise dazu eingerichtet sein, über eine Bluetooth-und/oder NFC-Verbindung 302 mit der Zugangskontrollvorrichtung 10 des Paketkastens 30 zu kommunizieren. Es versteht sich, dass alternativ oder zusätzlich zu der Verbindung 302 weitere Verbindungen (z.B. eine WLAN-Verbindung) zwischen dem Handscanner 32 und der Zugangskontrollvorrichtung 10 des Paketkastens 30 möglich sind.

Optional können das Mobiltelefon 32 und der Handscanner 32 direkt über eine Verbindung 306 über ein Mobilfunknetzwerk (z.B. ein GSM-, UMTS- und/oder LTE-Mobilfunknetzwerk) kommunizieren.

Der Schlüsselserver 20 kann beispielsweise über eine Verbindung 303 mit dem Mobiletelefon 31 kommunizieren. Neben dem Schlüsselserver 20 umfasst System 3 optional einen Bereitstellungsserver 35. Der Bereitstellungsserver 35 ist eingerichtet, um - direkt oder indirekt - mit dem Schlüsselserver 20 (z.B. über Verbindung 304) und mit verschiedenen Zustellergeräten wie dem Handscanner 32 (z.B. über Verbindung 305) zu kommunizieren. Es versteht sich, dass die Funktionen des Bereitstellungsservers 35 auch in dem Schlüsselserver 20 implementiert sein könnten. Andererseits könnte einem Schlüsselserver 20 auch eine Mehrzahl von Bereitstellungsservern zugeordnet sein. Die Bereitstellungsserver könnten in dem Fall optional auch verschiedenen Logistik- und/oder Zustellungsdiensten zugeordnet sein. Die Verbindungen 303, 304 und 305 sind beispielsweise Verbindungen über das Internet. Es ist jedoch auch denkbar, dass eine oder mehrere dieser Verbindungen über ein anderes (z.B. privates) Netzwerk und/oder lokale Verbindungen sind.

Es versteht sich, dass außerdem diverse weitere Server des Logistik- und/oder Zustellungsdienstes in das System 3 eingebunden sein können.

Das System gestattet es zum Beispiel dem Zusteller 34, mit Hilfe des Handscanners 32 über die Zugangskontrollvorrichtung 10 des Paketkastens 30 eine Kommunikationsverbindung zum Mobiltelefon 31 des Sendungsempfängers 33 aufzubauen, ohne dass der Zusteller 34 dafür die Kontaktinformationen zum Kontaktieren des Mobiltelefons 31 (z.B. die Telefonnummer des Mobiltelefons 31) kennen muss. Fig. 4 und 5 illustrieren beispielhafte Operationen in dem System 3 aus Fig. 3.

Fig. 4 ist ein Flussdiagramm 400, das Aktionen für eine Bereitstellung eines digitalen Schlüssels für einen Handscanner 32 eines Zustellers illustriert. Die Schritte 401 bis 403 des Flussdiagramms 400 sind beispielsweise Schritte einer beispielhaften Ausführungsform des Verfahrens gemäß dem zweiten Aspekt der Erfindung.

Der Paketkasten 30 ermöglicht es einem Zusteller, ein Paket zuzustellen oder abzuholen, auch wenn der Empfänger nicht zu Hause ist. Hierzu erhält und speichert ein Handscanner 32 des Zustellers beispielsweise einen digitalen Schlüssel speziell für den Paketkasten 30 des Sendungsempfängers. Der digitale Schlüssel ermöglicht es dem Zusteller, den Paketkasten 30 zu öffnen. Die Gültigkeit des digitalen Schlüssels kann dabei beispielsweise auf den Tag der Zustellung begrenzt sein. In einigen Fällen kann eine Zustellung oder Abholung jedoch trotz eines zur Verfügung stehenden, gültigen Schlüssels für den Paketkasten 30 nicht ohne weiteres möglich sein.

Beispielsweise kann das Paket zu groß sein für den Paketkasten 30, oder der Paketkasten 30 ist zwar im Freien, aber auf einem abgegrenzten Gelände hinter einem verschlossenen Tor angebracht. Um dem Zusteller in einem solchen Fall die Kontaktaufnahme mit dem Sendungsempfänger zu ermöglichen, kann der Sendungsempfänger beispielsweise mittels des Mobiltelefons 31 Kontaktinformationen in der Zugangskontrollvorrichtung 10 hinterlegen, mit deren Hilfe eine Kommunikationsverbindung zum Mobiltelefon 31 des Sendungsempfängers aufgebaut werden kann. Damit der Zusteller über die Zugangskontrollvorrichtung 10 diese Kommunikationsverbindung aufbauen kann, muss der Zusteller sich beispielsweise mit dem digitalen Schlüssel speziell für den Paketkasten 30 des Sendungsempfängers gegenüber der Zugangskontrollvorrichtung authentisieren. Beispielsweise berechtigt der digitale Schlüssel den Zusteller sowohl zum Öffnen des Paketkastens 30 als auch zum Aufbauen der Kommunikationsverbindung mit dem Mobiltelefon 31. Alternativ können auch unterschiedliche digitale Schlüssel zum Öffnen des Paketkastens 30 und zum Aufbauen der Kommunikationsverbindung mit dem Mobiltelefon 31 berechtigen.

In einem Schritt 401 empfängt der Schlüsselserver eine Anforderung zum Zusammenstellen und/oder Erzeugen eines digitalen Schlüssels, der den Handscanner 32 zum Aufbau einer Kommunikationsverbindung über die Zugangskontrollvorrichtung 10 berechtigt.

Die Anforderung enthält beispielsweise als eindeutige Kennung der Zugangskontrollvorrichtung 10 eine Identifizierungsnummer einer Schließeinrichtung und/oder des Schließsystems des Paketkastens 30. Eine solche Identifizierungsnummer wird im Folgenden als LockID bezeichnet.

Anschließend stellt der Schlüsselserver 20 in einem Schritt 402 den digitalen Schlüssel zusammen und/oder erzeugt diesen. Der digitale Schlüssel enthält Berechtigungsinformationen und Prüfinformationen und wird ggf. ergänzt durch begleitende Zusatzinformationen.

Die Berechtigungsinformationen können zum Beispiel die LockID und verschiedene weitere Berechtigungsparameter enthalten, die den Handscanner 32 zum Aufbau einer Kommunikationsverbindung über die Zugangskontrollvorrichtung 10 berechtigen. Zusätzlich kann der Schlüsselserver 20 den Berechtigungsinformationen Berechtigungsparameter, die zu einer anderen der LockID zugeordneten Aktion - insbesondere das Öffnen des Pakektkastens - berechtigen, hinzufügen. Solche Berechtigungsparameter können in Speicher 22 des Schlüsselservers 20 gespeichert und beispielsweise anhand der erhaltenen LockID ausgelesen und zusammengestellt werden. Es versteht sich, dass den Berechtigungsinformation noch beliebige weitere Berechtigungsparameter beigefügt werden können, wie eine Anzahl von erlaubten Verwendungen des generierten digitalen Schlüssels.

Die Berechtigungsinformationen können beispielsweise ein oder mehrere der folgenden Berechtigungsparameter enthalten:

| | | |
|---|---|---|
| • | LockID: | ID der Schließeinrichtung und/oder des Schließsystems |
| • | NotBeforeDate: | Datum "gültig von" mit Jahr/Monat/Tag |
| • | NotAfterDate: | Datum "gültig bis" mit Jahr/Monat/Tag |
| • | StartTimeOfDate: | Uhrzeit ab wann die Berechtigungsinformation gültig ist (Standard z.B. 00:00:00) |
| • | EndTimeOfDay: | Uhrzeit bis wann die Berechtigung gültig ist (Standard z.B. 23:59:59) |
| • | MaxUses: | Anzahl der Verwendungen; Standard 0 bedeutet "unbegrenzt" |
| • | Permissions: | Erlaubnis für sicherheitskritische Operationen am Schließsystem, Erlaubnis zum Aufbau einer Kommunikationsverbindung über die Zugangskontrollvorrichtung |

Dabei definieren die zwei Parameter "NoteBeforeDate" und "NotAfterDate" den Gültigkeitszeitraum der Berechtigung, z.B. mit der Genauigkeit eines Tages.

"NotBeforeDate" legt den Tag der Erstverwendung fest und "NotAfterDate" den letzten Tag im Gültigkeitszeitraum. "StartTimeOfDay" spezifiziert weiter die Uhrzeit, ab wann der Gültigkeitszeitraum beginnt, und "EndTimeOfDay" spezifiziert, wann dieser endet. Die Genauigkeit ist beispielsweise eine Sekunde. Der Zeitraum der Gültigkeit des digitalen Schlüssels kann zum Beispiel auf einen vorgegebenen Zeitraum an dem für die Zustellung geplanten Tag (etwa für den ganzen Tag, also zwischen 0:00 Uhr und 23:59 Uhr oder für einen Zeitraum an dem Tag, z.B. zwischen 14:00 Uhr und 18:00 Uhr) festgelegt werden. Zum Beispiel enthält die Anforderung entsprechende Informationen zu dem geplanten Zustellungstag und/oder Zustellungszeitraum.

"MaxUses" definiert, wie oft der digitale Schlüssel verwendet werden kann. Der Wert "0" legt dabei beispielsweise fest, dass der digitale Schlüssel unbegrenzt im definierten Zeitraum verwendet werden darf.

"Permissions" kodiert, beispielsweise durch das Setzen von einzelnen Bits in einem Byte, welche sicherheitskritischen Operationen ein über den digitalen Schlüssel verfügendes Gerät ausführen darf (ein auf'1' gesetztes Bit zeigt dann jeweils das Vorliegen der Berechtigung an), z.B. ob jeweils ein Öffnen eines Paketfachs oder ob ein Öffnen eines Paketfachs und eines Brieffachs erlaubt wird sowie ob ein Aufbau einer Kommunikationsverbindung über die Zugangskontrollvorrichtung erlaubt wird. Sofern der Sendungsempfänger (z.B. bis zu einem festgelegten Zeitpunkt vor der Zustellung und/oder Abholung) den Aufbau einer Kommunikationsverbindung über die Zugangskontrollvorrichtung 10 nicht freigegeben hat, umfassen die Berechtigungsinformationen zum Beispiel lediglich einen Berechtigungsparameter, der das Öffnen eines Paketfachs oder das Öffnen eines Paketfachs und eines Brieffachs des Paketkastens 30 (nicht jedoch den Aufbau einer Kommunikationsverbindung über die Zugangskontrollvorrichtung) erlaubt.

Die Prüfinformationen erlauben es, die Berechtigungsinformationen und damit die Berechtigung an sich zu prüfen. Sie können beispielsweise mit einem am Schlüsselserver 20 gespeicherten Schlüssel S1 verschlüsselte Berechtigungsinformationen oder eine mit einem am Schlüsselserver 20 gespeicherten Schlüssel S1 erzeugte Signatur über die Berechtigungsinformationen sein. Der Schlüssel S1 kann zu Beispiel ein Schlüssel eines symmetrischen Schlüsselpaars oder ein Schlüssel eines asymmetrischen Schlüsselpaars sein. In Speicher 22 des Schlüsselservers 20 kann für eine Vielzahl von Schließsystemen und/oder Schließeinrichtungen jeweils ein eigener Schlüssel S1 mit Zuordnung zu der LockID des jeweiligen Schließsystems und/oder der Schließeinrichtung gespeichert sein. Der jeweils benötigte Schlüssel S1 kann dann anhand der erhaltenen LockID abgerufen und für die Erzeugung der Prüfinformation verwendet werden. Im Falle eines symmetrischen Schlüsselpaars kann der Schlüssel S1 ausschließlich in dem Schlüsselserver 20 und - als identischer Schlüssel S2 - in der durch die LockID identifizierten Zugangskontrollvorrichtung 10 gespeichert sein. Im Falle eines Verschlüsselungsverfahrens mit asymmetrischem Schlüsselpaar kann der öffentliche Schlüssel S1 zum Verschlüsseln ausschließlich in dem Schlüsselserver 20 gespeichert sein, während der entsprechende private Schlüssel S2 zum Entschlüsseln ausschließlich in der durch die LockID identifizierten Zugangskontrollvorrichtung gespeichert sein kann. Im Falle eines Signierungsverfahrens mit asymmetrischem Schlüsselpaar kann der private Schlüssel S1 zum Signieren ausschließlich in dem Schlüsselserver 20 gespeichert sein, während der entsprechende öffentliche Schlüssel S2 zum Prüfen der Signatur ausschließlich in der durch die LockID identifizierten Zugangskontrollvorrichtung gespeichert sein kann.

Es versteht sich, dass dem digitalen Schlüssel noch beliebige weitere Informationen als Zusatzinformationen beigefügt werden können, wie eine SendungsID für ein erwartetes Paket, eine SendungsID für ein abzuholendes Paket, eine der LockID in Speicher 22 des Schlüsselservers 20 zugeordnete Straßenadresse und/oder die erhaltene oder aus einem dem Speicher 22 des Schlüsselservers 20 ausgelesene MAC-Adresse der Zugangskontrollvorrichtung 10.

Der Schlüsselserver 20 kann für eine Vielzahl von Nutzern entsprechende digitale Schlüssel erzeugen, wenn für den jeweiligen Nutzer ein Paket zuzustellen oder abzuholen ist.

In einem Schritt 403 kommuniziert der Schlüsselserver 20 den digitalen Schlüssel mit den beigeordneten Zusatzinformationen an den Bereitstellungsserver 35.

Der Bereitstellungsserver 35 erhält beispielsweise eine Vielzahl von digitalen Schlüsseln von dem Schlüsselserver 20, beispielsweise über eine gesicherte Internetverbindung. Der Bereitstellungsserver 35 legt zum Beispiel für einen jeweiligen Tag Zustellbezirke fest, in denen Zusteller Pakete ausliefern sollen. Er stellt dann in einem Schritt 404 für jeden Zustellbezirk die digitalen Schlüssel zusammen, die eine LockID enthalten, die ein Schließsystem und/oder eine Schließeinrichtung in dem Zustellbezirk identifiziert. Hierzu kann der Bereitstellungsserver 35 eine Zuordnung der LockIDs der Schließsysteme und/oder Schließeinrichtungen von installierten Paketkästen zu Straßenadressen in einem Speicher speichern und für die Zusammenstellung der digitalen Schlüssel auswerten, sofern die Straßenadressen nicht bereits von dem Schlüsselserver 20 zusammen mit den digitalen Schlüsseln bereitgestellt wurden.

In einem Schritt 405 kommuniziert der Bereitstellungsserver 35 die für einen jeweiligen Zustellbezirk zusammengestellten digitalen Schlüssel zusammen mit den ggf. vom Schlüsselserver 20 beigeordneten Zusatzinformationen für die digitalen Schlüssel auf den Handscanner 32 eines Zustellers, der für den Zustellbezirk eingeteilt ist. Alternativ oder zusätzlich kann der Bereitstellungsserver 35 ein solches Kommunizieren bewirken. Das Kommunizieren kann auf vielfältige Weise erfolgen. Beispielsweise kann das Kommunizieren in einem Paketcenter, an dem der Zusteller die auszuliefernden Pakete einlädt, erfolgen. Das Kommunizieren kann dann beispielsweise über ein lokales WLAN erfolgen. Alternativ könnte das Kommunizieren über einen ortsfesten Computer mittels Kabelverbindung oder Bluetooth, oder aber über eine Dockingstation für die Handscanner erfolgen. Das Kommunizieren könnte weiter alternativ auch über ein Mobilfunknetz erfolgen, wenn die Handscanner für eine Kommunikation über das Mobilfunknetz eingerichtet sind. Die Übertragung kann jeweils zusätzlich gesichert sein, beispielsweise mittels einer Verschlüsselung, die nur von dem jeweils vorgesehenen Handscanner 32 entschlüsselbar ist.

In einem Schritt 406 empfängt der Handscanner 32 die digitalen Schlüssel für einen Zustellbezirk und speichert sie in einem internen Speicher. Wenn jeder Schlüssel beispielsweise maximal einen Tag lang Gültigkeit hat, können die gespeicherten digitalen Schlüssel zum Beispiel automatisch vor dem Einlesen neuer digitaler Schlüssel oder jeweils zu einer bestimmten Uhrzeit gelöscht werden.

Es versteht sich, dass ein digitaler Schlüssel in bestimmten Konstellationen auch an mehr als einen Handscanner 150 übertragen werden kann, beispielsweise um eine flexiblere Handhabung in angrenzenden Zustellbezirken zu ermöglichen.

Fig. 5 ist ein Flussdiagramm, das die Anforderung des Aufbaus einer Kommunikationsverbindung mit einer ersten Benutzervorrichtung über eine Zugangskontrollvorrichtung 10 des Paketkastens mittels eines Handscanners 32 mit geeignetem digitalem Schlüssel darstellt. Die Schritte 506 bis 508 des Flussdiagramms 500 sind beispielsweise Schritte einer beispielhaften Ausführungsform des Verfahrens gemäß dem ersten Aspekt der Erfindung.

Wie oben beschrieben, ermöglicht es der Paketkasten 30 einem Zusteller, ein Paket zuzustellen oder abzuholen, auch wenn der Empfänger nicht zu Hause ist. In einigen Fällen kann eine Zustellung oder Abholung jedoch trotz eines zur Verfügung stehenden, gültigen Schlüssels für den Paketkasten 30 nicht ohne weiteres möglich sein. Beispielsweise kann das Paket zu groß sein für den Paketkasten 30, oder der Paketkasten 30 ist zwar im Freien, aber auf einem abgegrenzten Gelände hinter einem verschlossenen Tor angebracht. Um dem Zusteller in einem solchen Fall die Kontaktaufnahme mit dem Sendungsempfänger zu ermöglichen, kann der Sendungsempfänger beispielsweise mittels des Mobiltelefons 31 Kontaktinformationen in der Zugangskontrollvorrichtung 10 hinterlegen, mit deren Hilfe eine Kommunikationsverbindung zum Mobiltelefon 31 des Sendungsempfängers aufgebaut werden kann. Im Folgenden wird davon ausgegangen, dass entsprechende Kontaktinformationen im Speicher 12 der Zugangskontrollvorrichtung 10 gespeichert sind.

Ein Zusteller liefert in einem zugeteilten Zustellbezirk Pakete aus und nutzt hierzu den Handscanner 32. In dem Handscanner 32 sind die für den aktuellen Tag zusammengestellten und/oder erzeugten digitalen Schlüssel für den Zustellbezirk gespeichert.

Ein Paket soll an einer dem Paketkasten 30 zugeordneten Adresse ausgeliefert werden, aber das Fach des Paketkastens ist beispielsweise zu klein, um das Paket aufzunehmen.

In einem Schritt 501 scannt der Zusteller eine SendungsID oder einen umfangreicheren Code auf dem Paket mit dem Handscanner 32. Die SendungsID wird von dem Handscanner 32 erfasst und einer auf dem Handscanner 32 laufenden Anwendung zur Verfügung gestellt. In einem Schritt 502 ermittelt die Anwendung anschließend anhand der SendungsID einen der SendungsID zugeordneten und auf dem Handscanner 32 gespeicherten digitalen Schlüssel und dem digitalen Schlüssel ggfs. zugeordnete gespeicherte Zusatzinformationen.

Der von der Anwendung ermittelte digitale Schlüssel enthält in den Berechtigungsinformationen beispielsweise ein gesetztes Bit in dem "Permissions" Parameter für das Öffnen des Paketkastens und ein weiteres gesetztes Bit in dem "Permissions" Parameter für einen Aufbau einer Kommunikationsverbindung über die Zugangskontrollvorrichtung.

In einem Schritt 503 zeigt der Handscanner 32 dem Zusteller die durch die Berechtigungsinformationen erlaubten Aktionen an, um dem Zusteller die Möglichkeit zu geben eine der Aktionen auszuwählen. Zusätzlich können dem Zusteller beispielsweise dem digitalen Schlüssel und/oder der SendungsID zugeordnete Informationen wie der Name des Sendungsempfängers und/oder die Zustelladresse angezeigt werden.

Der Zusteller kann nun das Öffnen des Paketkastens 30 oder den Aufbau einer Kommunikationsverbindung mit dem Sendungsempfänger über die Zugangskontrollvorrichtung 10 durch eine entsprechende Bestätigung an dem Handscanner 32 anfordern. In einem Schritt 504 erfasst der Handscanner 32 beispielsweise eine Eingabe des Zustellers, dass eine Kommunikationsverbindung mit dem Sendungsempfänger über die Zugangskontrollvorrichtung 10 aufgebaut werden soll.

Der Handscanner 32 baut daraufhin eine Verbindung (z.B. Verbindung 302) mit der Zugangskontrollvorrichtung 10 des Paketkastens 30 auf, beispielsweise eine Bluetooth-Verbindung. Hierzu kann der Handscanner 32 eine in dem ausgelesenen digitalen Schlüssel oder in der Zusatzinformation enthaltene MAC-Adresse der Zugangskontrollvorrichtung 10 nutzen, um den Verbindungsaufbau zu ermöglichen oder zu beschleunigen. In einigen Ausführungsbeispielen könnte die LockID auch identisch sein mit der MAC-Adresse, so dass eine getrennte Aufnahme einer MAC-Adresse in dem digitalen Schlüssel oder in der Zusatzinformation nicht erforderlich ist. Ein Verbindungsaufbau ist aber auch ohne Kenntnis der MAC-Adresse mittels eines Bluetooth-Pairings möglich.

Wenn die Verbindung erstellt ist, kommuniziert der Handscanner 32 in einem Schritt 505 eine Anforderung zum Aufbau einer Kommunikationsverbindung an die Zugangskontrollvorrichtung 10, wobei die Anforderung den digitalen Schlüssel enthält. Ferner enthält die Anforderung beispielsweise Kommandoinformationen, die angeben, dass eine Kommunikationsverbindung mit einer ersten Benutzervorrichtung aufgebaut werden soll. Die Zusatzinformationen brauchen hierbei nicht übertragen zu werden, da sie ggfs. nur für die Operation des Handscanners 32 und für eine Information an den Zusteller benötigt werden. Alternativ zu einer Bluetooth-Verbindung kann auch eine andere Art der Verbindung genutzt werden, wie beispielsweise eine NFC- oder eine RFID-Verbindung.

Die Zugangskontrollvorrichtung unterstützt den Verbindungsaufbau und empfängt in einem Schritt 506 die Anforderung mit dem digitalen Schlüssel über eine Bluetooth-Schnittstelle (z.B. die Kommunikationsschnittstelle 14).

In einem Schritt 507 prüft die Zugangskontrollvorrichtung 10 zunächst die Berechtigung der Anforderung zumindest teilweise anhand des digitalen Schlüssels. Die Prüfung kann verschiedene Punkte umfassen, die in beliebiger Reihenfolge abgearbeitet werden können.

So kann die Zugangskontrollvorrichtung 10 prüfen, ob eine in der Berechtigungsinformation des digitalen Schlüssels enthaltene LockID mit der LockID der Zugangskontrollvorrichtung 10 übereinstimmt. Die LockID der Zugangskontrollvorrichtung 10 kann in dem Speicher 12 gespeichert sein. Liegt keine Übereinstimmung vor, so wird der Vorgang abgebrochen.

Des Weiteren kann die Zugangskontrollvorrichtung 10 prüfen, ob die von einer internen Uhr angegebene Zeit in einen durch die Berechtigungsinformation definierten Zeitraum fällt. Ist dies nicht der Fall, so wird der Vorgang abgebrochen.

Zusätzlich könnte die Zugangskontrollvorrichtung 10 anhand eines internen Zählers prüfen, ob der gleiche digitale Schlüssel bereits öfter als gemäß einer Angabe in einem "MaxUses" Parameter erlaubt übermittelt wurde. Ist dies der Fall, so wird der Vorgang abgebrochen.

Des Weiteren kann die Zugangskontrollvorrichtung 10 die Authentizität und Integrität der Berechtigungsinformation prüfen. So kann die Zugangskontrollvorrichtung 10 mit Schlüssel S1 verschlüsselte Prüfinformationen in dem digitalen Schlüssel mit einem in dem Speicher 12 gespeicherten Schlüssel S2 entschlüsseln. Die entschlüsselten Prüfinformationen können dann mit den Berechtigungsinformationen verglichen werden. Stimmen die Informationen nicht überein, so wird der Vorgang abgebrochen. Alternativ kann die Zugangskontrollvorrichtung 10 eine mit Schlüssel S1 als Prüfinformationen erzeugte Signatur in dem digitalen Schlüssel mit einem in dem Speicher 12 gespeicherten Schlüssel S2 prüfen. Kann die Signatur nicht validiert werden, so wird der Vorgang abgebrochen. Es versteht sich, dass sowohl bei einer Verschlüsselung als auch bei einer Signatur zusätzlich eine Hash-Funktion angewandt und bei der Prüfung berücksichtigt werden kann.

War das Ergebnis sämtlicher Prüfungen dagegen positiv, so baut die Zugangskontrollvorrichtung in Schritt 508 eine Kommunikationsverbindung mit dem Mobiltelefon 31 des Sendungsempfängers auf oder bewirkt einen Aufbau einer solchen Kommunikationsverbindung. Zum Beispiel baut die Zugangskontrollvorrichtung in Schritt 508 mit Hilfe der im Speicher 12 gespeicherten Kontaktinformationen des Mobiltelefons 31 (z.B. der Telefonnummer des Mobiltelefons 31 und/oder einer darin befindlichen SIM-Karte) die Verbindung 301 über ein Mobilfunknetzwerk auf, so dass eine Kommunikation zwischen dem Zusteller 34 und dem Sendungsempfänger 33 beispielsweise über die Verbindung 302 und die Verbindung 301 möglich ist. Beispielsweise ist die Zugangskontrollvorrichtung 10 eingerichtet, Informationen (z.B. Daten) zwischen den Verbindungen 301 und 302 zu vermitteln. In diesem Fall umfasst die Kommunikationsverbindung beispielsweise die Verbindungen 301 und 302.

Die Kommunikationsverbindung ermöglicht beispielsweise eine Text-, Sprach- und/oder Videokommunikation. Zum Beispiel kann der Zusteller 34 dem Sendungsempfänger 33die Situation über die Kommunikationsverbindung schildern, und der Sendungsempfänger 33 kann dem Zusteller 34 anschließend über die Kommunikationsverbindung mitteilen, an welcher Stelle die Sendung alternativ zugestellt (z.B. bei einem Nachbarn) und/oder abgelegt (z.B. an der Hintertür) werden kann.

Bestimmte Ausführungsformen der Erfindung ermöglichen somit eine Erweiterung der Nutzbarkeit von Zustellergeräten, die mit einer Zugangskontrolleinrichtung eines Paketkastens kommunizieren können, um über die Zugangskontrollvorrichtung mit einem Sendungsempfänger kommunizieren zu können. Besonders vorteilhaft ist dabei, dass der Zusteller und das Zustellergerät sowie andere Dritte keinen Zugriff auf die Kontaktinformationen erhalten, da die Kontaktinformationen nur in der Zugangskontrollvorrichtung gespeichert werden.

Es versteht sich, dass das beschriebene System und die beschriebenen Verfahren die Erfindung lediglich beispielhaft erläutern. Das System kann durch Hinzufügen, Abändern und Weglassen von Komponenten abgewandelt werden, und die Verfahren können durch Hinzufügen, Abändern und Weglassen von Schritten abgewandelt werden. Einige Schritte können auch in anderen Reihenfolgen ausgeführt werden, und einzelne Schritte können auch von anderen Komponenten durchgeführt werden als beschrieben.

Die in dieser Spezifikation beschriebenen beispielhaften Ausführungsformen der vorliegenden Erfindung sollen auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Flussdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

## Patentansprüche

1. Verfahren, ausgeführt durch eine Zugangskontrollvorrichtung (10), wobei die Zugangskontrollvorrichtung (10) den Zugang zu einer Aufnahmeeinheit zur Aufnahme einer Sendung kontrolliert, das Verfahren umfassend:
- Erhalten (506) einer Anforderung zum Aufbau einer Kommunikationsverbindung, wobei die Anforderung Berechtigungsinformationen und Kontaktinformationen zum Kontaktieren einer zweiten Benutzervorrichtung (32) enthält, wobei die Anforderung von der zweiten Benutzervorrichtung (32) an die Zugangskontrollvorrichtung (10) kommuniziert wurde, und wobei die Zugangskontrollvorrichtung (10) und die zweite Benutzervorrichtung (32) über eine drahtlose Verbindung gemäß einer lokalen Funknetztechnik und/oder eine Verbindung über ein drahtloses lokales Netzwerk kommunizieren;
- Prüfen (507) der Berechtigung der Anforderung zum Aufbau einer Kommunikationsverbindung zumindest teilweise anhand der Berechtigungsinformationen;
- Bereithalten einer oder mehrerer Kontaktinformationen, wobei die Kontaktinformationen Angaben zum Kontaktieren einer ersten Benutzervorrichtung (31) umfassen und
- Bewirken des Aufbauens (508) einer Kommunikationsverbindung mit der ersten Benutzervorrichtung (31) nur dann, wenn das Prüfen ergibt, dass die Anforderung zum Aufbau einer Kommunikationsverbindung berechtigt ist, wobei die Kommunikationsverbindung zwischen der ersten Benutzervorrichtung (31) und der zweiten Benutzervorrichtung (32) aufgebaut wird, wobei das Bewirken des Aufbauens der Kommunikationsverbindung das Kommunizieren einer weiteren Anforderung, die Kommunikationsverbindung mit der zweiten Benutzervorrichtung (32) aufzubauen, an die erste Benutzervorrichtung (31) umfasst.

2. Verfahren gemäß Anspruch 1, wobei die Berechtigungsinformationen zumindest teilweise verschlüsselt sind, und wobei das Prüfen der Berechtigung der Anforderung folgendes umfasst:
- Entschlüsseln der verschlüsselten Berechtigungsinformationen; und
- Vergleichen der entschlüsselten Berechtigungsinformationen mit nicht verschlüsselten Informationen, wobei die nicht verschlüsselten Informationen ebenfalls in den Berechtigungsinformationen enthalten, aus enthaltenen Informationen hergeleitet und/oder in der Zugangskontrollvorrichtung (10) gespeichert sind.

3. Verfahren gemäß einem der Ansprüche 1 und 2, wobei die Anforderung eine oder mehrere Prüfinformationen, insbesondere eine digitale Signatur, enthält, und wobei das Prüfen der Berechtigung der Anforderung ein Prüfen der Prüfinformationen umfasst.

4. Verfahren gemäß einem der Ansprüche 1 bis 3, wobei die erste Benutzervorrichtung (31) und/oder die zweite Benutzervorrichtung (32):
- ein tragbares elektronisches Gerät ist, und/oder
- ein Handscanner ist und/oder
- ein mobiles Kommunikationsgerät ist.

5. Verfahren gemäß einem der Ansprüche 1 bis 4, wobei die
Kommunikationsverbindung eine lokale Verbindung (302) zwischen der Zugangskontrollvorrichtung (10) und der zweiten Benutzervorrichtung (32) umfasst.

6. Verfahren gemäß einem der Ansprüche 1 bis 4, wobei die
Kommunikationsverbindung eine Verbindung (306) über ein überregionales Kommunikationsnetzwerk zwischen der ersten Benutzervorrichtung (31) und der zweiten Benutzervorrichtung (32) umfasst.

7. Verfahren gemäß einem der Ansprüche 1 bis 6, wobei die Kommunikationsverbindung eine Verbindung (301) über ein überregionales Kommunikationsnetzwerk zwischen der Zugangskontrollvorrichtung (10) und der ersten Benutzervorrichtung (31) umfasst.

8. Verfahren gemäß einem der Ansprüche 1 bis 7, wobei die
Zugangskontrollvorrichtung (10):
- ortsfest angebracht ist und/oder
- in oder an einem Paketkasten (30) angebracht ist und/oder
- Teil eines Schließsystems eines Paketkastens (30) ist und/oder
- in oder an einem Paketbutler angebracht ist und/oder
- Teil eines Schließsystems eines Paketbutlers ist und/oder
- Teil einer Aufnahmeeinheit zur Aufnahme einer Sendung ist.

9. Zugangskontrollvorrichtung (10), umfassend:
- Mittel (11 - 16) eingerichtet zur Ausführung des Verfahrens gemäß einem der Ansprüche 1 bis 8.

10. Computerprogramm, umfassend Programmanweisungen, die dazu ausgebildet sind, bei Ausführung durch mindestens einen Prozessor einer Zugangskontrollvorrichtung, die Zugangskontrollvorrichtung zu veranlassen, das Verfahren gemäß einem der Ansprüche 1 bis 8 auszuführen.

11. System, umfassend:
- eine Zugangskontrollvorrichtung (10) gemäß Anspruch 9, und
- einen Server (30) umfassend Mittel (21 - 24) eingerichtet zur Ausführung eines Verfahrens umfassend:
- Erhalten (401) einer Anforderung zum Zusammenstellen und/oder Erzeugen von Berechtigungsinformationen, die zum Aufbau einer Kommunikationsverbindung über die Zugangskontrollvorrichtung (10) berechtigen, wobei die Anforderung Informationen zum Zusammenstellen und/oder Erzeugen der Berechtigungsinformation enthält;
- Zusammenstellen und/oder Erzeugen (402) der Berechtigungsinformationen, zumindest teilweise basierend auf der erhaltenen Anforderung, wobei die Berechtigungsinformationen der Zugangskontrollvorrichtung (10) ein Prüfen der Berechtigung zum Aufbau der Kommunikationsverbindung ermöglichen, und wobei die Berechtigungsinformationen zumindest teilweise auf der erhaltenen Anforderung basieren; und
- Bewirken des Kommunizierens und/oder Kommunizieren (403) der Berechtigungsinformationen an eine Benutzervorrichtung (32) zum Berechtigen der Benutzervorrichtung (32), einen Aufbau einer Kommunikationsverbindung über die Zugangskontrollvorrichtung (10) anzufordern.

## Claims

1. Method, performed by an access control apparatus (10), wherein the access control apparatus (10) controls access to a receiving unit for receiving a. shipment, the method comprising:
- obtaining (506) a request to set up a communication link, wherein the request contains authorization information and contact information for contacting a second user apparatus (32), wherein the request was communicated from the second user apparatus (32) to the access control apparatus (10), and wherein the access control apparatus (10) and the second user apparatus (32) communicate via a wireless connection using a local radio network technique and/or a connection via a wireless local area network;
- checking (507) the authorization of the request to set up a communication link at least in part on the basis of the authorization information;
- holding one or more pieces of contact information, wherein the contact information comprises details for contacting the first user apparatus (31) and
- causing setting up (508) a communication link to a first user apparatus (31) only if the result of the checking is that the request to set up a communication link is authorized, wherein the communication link is set up between the first user apparatus (31) and the second user apparatus (32), wherein the causing setting up the communication link comprises communicating, to the first user apparatus (31), a further request to set up the communication link to the second user apparatus (32).

2. Method according to Claim 1, wherein the authorization information is at least in part encrypted, and wherein checking the authorization of the request comprises the following:
- decrypting the encrypted authorization information; and
- comparing the decrypted authorization information with unencrypted information, wherein the unencrypted information is likewise contained in the authorization information, derived from contained information and/or stored in the access control apparatus (10).

3. Method according to any of Claims 1 and 2, wherein the request contains one or more pieces of checking information, particularly a digital signature, and wherein checking the authorization of the request comprises checking the checking information.

4. Method according to any of Claims 1 to 3, wherein the first user apparatus (31) and/or the second user apparatus (32):
- is a portable electronic device and/or
- is a hand-held scanner and/or
- is a mobile communication device.

5. Method according to any of Claims 1 to 4, wherein the communication link comprises a local connection (302) between the access control apparatus (10) and the second user apparatus (32).

6. Method according to any of Claims 1 to 4, wherein the communication link comprises a connection (306) via a transregional communication network between the first user apparatus (31) and the second user apparatus (32).

7. Method according to one of Claims 1 to 6, wherein the communication link comprises a connection (301) via a transregional communication network between the access control apparatus (10) and the first user apparatus (31).

8. Method according to any of Claims 1 to 7, wherein the access control apparatus (10):
- is fitted at a fixed location and/or
- is fitted in or to a parcel box (30) and/or
- is part of a locking system of a parcel box (30) and/or
- is fitted in or to a parcel butler and/or
- is part of a locking system of a parcel butler and/or
- is part of a receiving unit for receiving a shipment.

9. Access control apparatus (10), comprising:
- means (11 -16) configured to perform the method according to any of Claims 1 to 8.

10. Computer program, comprising program instructions that are designed, when executed by at least one processor of an access control apparatus, to cause the access control apparatus to perform the method according to any of Claims 1 to 8.

11. System comprising:
- an access control apparatus (10) according to Claim 9, and
- a server (30) comprising means (21- 24) configured to perform a method comprising:
- obtaining (401) a request to compile and/or generate authorization information that authorizes to set up a communication link via the access control apparatus (10), wherein the request contains information pertaining to the compilation and/or generation of the authorization information;
- compiling and/or generating (402) the authorization information based at least in part on the obtained request, wherein the authorization information allows the access control apparatus (10) to check the authorization to set up the communication link, and wherein the authorization information is based at least in part on the obtained request; and
- causing communicating and/or communicating (403) the authorization information to a user apparatus (32) in order to authorize the user apparatus (32) to request to set up a communication link via the access control apparatus (10).

## Revendications

1. Procédé mis en oeuvre par un dispositif de contrôle d'accès (10), dans lequel le dispositif de contrôle d'accès (10) contrôle l'accès à une unité de réception pour recevoir un envoi, le procédé comprenant :
- recevoir (506) une demande d'établissement d'une liaison de communication, où la demande contient des informations d'autorisation et des informations de contact pour contacter un deuxième dispositif utilisateur (32), où la demande a été communiquée du deuxième dispositif utilisateur (32) au dispositif de contrôle d'accès (10), et où le dispositif de contrôle d'accès (10) et le deuxième dispositif utilisateur (32) communiquent par l'intermédiaire d'une liaison sans fil selon une technique de réseau radio local et/ou une liaison par l'intermédiaire d'un réseau local sans fil ;
- vérifier (507) l'autorisation de la demande d'établissement d'une liaison de communication au moins en partie sur la base des informations d'autorisation ; tenir à disposition une ou plusieurs informations de contact, où les informations de contact comprennent des indications pour contacter un premier dispositif utilisateur (31) ; et
- provoquer l'établissement (508) d'une liaison de communication avec le premier dispositif utilisateur (31) uniquement si la vérification indique que la demande d'établissement d'une liaison de communication est autorisée, la liaison de communication étant établie entre le premier dispositif utilisateur (31) et le deuxième dispositif utilisateur (32), la provocation d'établissement de la liaison de communication comprenant la communication au premier dispositif utilisateur (31) d'une demande supplémentaire d'établissement de la liaison de communication avec le deuxième dispositif utilisateur (32).

2. Procédé selon la revendication 1, dans lequel les informations d'autorisation sont au moins partiellement cryptées, et dans lequel la vérification de l'autorisation de la demande comprend ce qui suit :
- décrypter les informations d'autorisation cryptées ; et
- comparer les informations d'autorisation décryptées à des informations non cryptées, les informations non cryptées étant également contenues dans les informations d'autorisation, déduites des informations contenues et/ou stockées dans le dispositif de contrôle d'accès (10).

3. Procédé selon l'une des revendications 1 et 2, dans lequel la demande comprend une ou plusieurs informations de vérification, notamment une signature numérique, et dans lequel la vérification de l'autorisation de la demande comprend une vérification des informations de vérification.

4. Procédé selon l'une des revendications 1 à 3, dans lequel le premier dispositif utilisateur (31) et/ou le deuxième dispositif utilisateur (32) est :
- un dispositif électronique portable, et/ou
- un scanner portatif et/ou
- un dispositif de communication mobile.

5. Procédé selon l'une des revendications 1 à 4, dans lequel la liaison de communication comprend une liaison locale (302) entre le dispositif de contrôle d'accès (10) et le deuxième dispositif utilisateur (32).

6. Procédé selon l'une des revendications 1 à 4, dans lequel la liaison de communication comprend une connexion (306) via un réseau de communication interrégional entre le premier dispositif utilisateur (31) et le deuxième dispositif utilisateur (32).

7. Procédé selon l'une des revendications 1 à 6, dans lequel la liaison de communication comprend une connexion (301) via un réseau de communication interrégional entre le dispositif de contrôle d'accès (10) et le premier dispositif utilisateur (31).

8. Procédé selon l'une quelconque des revendications 1 à 7, dans lequel le dispositif de contrôle d'accès (10) :
- est installé de manière fixe par rapport à une position géographique et/ou
- est monté dans ou sur une boîte à colis (30) et/ou
- fait partie d'un système de fermeture d'une boîte à colis (30) et/ou
- est monté dans ou sur un réceptacle pour colis « Paketbutler » et/ou
- fait partie d'un système de fermeture d'un réceptacle pour colis « Paketbutler » et/ou
- fait partie d'une unité de réception pour recevoir un envoi.

9. Dispositif de contrôle d'accès (10), comprenant:
- des moyens (11 à 16) configurés pour mettre en oeuvre le procédé selon l'une des revendications 1 à 8.

10. Programme d'ordinateur comprenant des instructions de programme conçues pour, lors d'une exécution par au moins un processeur d'un dispositif de contrôle d'accès, amener le dispositif de contrôle d'accès à mettre en oeuvre le procédé selon l'une des revendications 1 à 8.

11. Système comprenant :
- un dispositif de contrôle d'accès (10) selon la revendication 9, et
- un serveur (30) comprenant des moyens (21 - 24) configurés pour mettre en œuvre un procédé comprenant :
- recevoir (401) une demande d'assemblage et/ou de génération d'informations d'autorisation autorisant l'établissement d'une liaison de communication via le dispositif de contrôle d'accès (10), la demande contenant des informations pour l'assemblage et/ou la génération des informations d'autorisation ;
- assembler et/ou générer (402) les informations d'autorisation, au moins en partie sur la base de la demande reçue, les informations d'autorisation du dispositif de contrôle d'accès (10) permettant une vérification de l'autorisation d'établir la liaison de communication, et les informations d'autorisation étant basées au moins en partie sur la demande reçue ; et
- provoquer la communication des informations d'autorisation et/ou communiquer (403) les informations d'autorisation à un dispositif utilisateur (32) pour autoriser le dispositif utilisateur (32) à demander l'établissement d'une liaison de communication via le dispositif de contrôle d'accès (10).
